# EUROPÄISCHE PATENTSCHRIFT

(11) **EP 4 238 300 B1**
(45) Veröffentlichungstag und Bekanntmachung des Hinweises auf die Patenterteilung: **29.07.2026**
(21) Anmeldenummer: 21790199.0
(22) Anmeldetag: 11.10.2021
(51) Int. Cl.: H04L 67/125, H04L 12/12, H04M 1/72415, H04W 4/38

(54) **KOPPLUNG EINES HAUSHALTSGERÄTS MIT EINEM MOBILGERÄT**
COUPLING A DOMESTIC APPLIANCE TO A MOBILE DEVICE
COUPLAGE D'UN APPAREIL ÉLECTROMÉNAGER À UN DISPOSITIF MOBILE

(30) Priorität: 02.11.2020 DE 102020213757
(43) Veröffentlichungstag der Anmeldung: 06.09.2023
(73) Patentinhaber: BSH Hausgeräte GmbH, 81739 München (DE)
(72) Erfinder: GRIMMINGER, Jochen, 89407 Dillingen (DE); KLEINLEIN, Philipp, 83346 Bergen (im Chiemgau) (DE); KOENE, Philip, 81245 München (DE); SCHAEFER, Frank, 82178 Puchheim (DE)
(86) Internationale Anmeldenummer: PCT/EP2021/078021
(87) Internationale Veröffentlichungsnummer: WO 2022/089926

(56) Entgegenhaltungen:
- DE-A1- 102010 060 650
- JANG MINSUNG ET AL: "SOUL: An Edge-Cloud System for Mobile Applications in a Sensor-Rich World", 2016 IEEE/ACM SYMPOSIUM ON EDGE COMPUTING (SEC), IEEE, 27 October 2016 (2016-10-27), pages 155 - 167, XP033018384, [retrieved on 20161205], DOI: 10.1109/SEC.2016.9
- RINALDI STEFANO ET AL: "Integrating remote sensors in a smartphone: The project "sensors for ANDROID in embedded systems"", 2016 IEEE SENSORS APPLICATIONS SYMPOSIUM (SAS), IEEE, 20 April 2016 (2016-04-20), pages 1 - 6, XP032905752, DOI: 10.1109/SAS.2016.7479892
- JEONGGIL KO ET AL: "Sensor Virtualization Module: Virtualizing IoT Devices on Mobile Smartphones for Effective Sensor Data Management", INTERNATIONAL JOURNAL OF DISTRIBUTED SENSOR NETWORKS, vol. 2015, 4 October 2015 (2015-10-04), US, pages 1 - 10, XP055736160, ISSN: 1550-1329, DOI: 10.1155/2015/730762
- SHAHZAD KHURRAM ET AL: "A comparative study of in-sensor processing vs. raw data transmission using ZigBee, BLE and Wi-Fi for data intensive monitoring applications", 2014 11TH INTERNATIONAL SYMPOSIUM ON WIRELESS COMMUNICATIONS SYSTEMS (ISWCS), IEEE, 26 August 2014 (2014-08-26), pages 519 - 524, XP032666682, DOI: 10.1109/ISWCS.2014.6933409

## Beschreibung

Die Erfindung betrifft ein Haushaltsgerät. Insbesondere betrifft die Erfindung eine drahtlose Kopplung eines Haushaltsgeräts mit einem Mobilgerät.

Ein Haushaltsgerät umfasst eine grafische Anzeige, auf der ein Zustand des Geräts dargestellt werden kann. Beispielsweise kann die Anzeige an einem Kühlgerät eine Innentemperatur, einen Füllgrad, eine aktuell aufgenommene Energie oder einen Betriebsmodus darstellen. Eine Bedienung des Haushaltsgeräts erfolgt üblicherweise mittels einer lokal angebrachten Eingabeeinrichtung, beispielsweise eines Schalters oder Drehknopfs. Die Eingabevorrichtung kann mit der Ausgabevorrichtung integriert ausgeführt sein, beispielsweise in Form eines berührungsempfindlichen Bildschirms (Touchscreen).

Die grafische Anzeige kann verwendet werden, um einem Benutzer eine zusätzliche Funktion bereitzustellen, die über die Steuerung des Haushaltsgeräts hinausgehen kann. Beispielsweise kann auf der Anzeige ein Kochrezept dargestellt werden. Es hat sich aber gezeigt, dass die Bereitstellung der zusätzlichen Funktion, im gegebenen Beispiel die Vorhaltung einer Sammlung von Kochrezepten, aufwändig zu implementieren sein kann. Die Funktion muss üblicherweise auf funktionaler Ebene und auf Daten-Ebene regelmäßig aktualisiert werden. Dabei kann eine Lebensdauer des Haushaltsgeräts eine Lebensdauer einer üblichen Plattform, mit der die Funktion klassischerweise bereitgestellt werden kann, um ein Vielfaches übersteigen. Das Haushaltsgerät kann daher schon weit vor dem Ende seiner Nutzungsdauer nicht mehr in der Lage sein, die zusätzliche Funktion in ihrer aktuellen Form zuverlässig auszuführen.

Eine Ausstattung des Haushaltsgeräts mit einer leistungsfähigen Verarbeitungseinrichtung kann kostenintensiv sein; außerdem ist üblicherweise nicht bekannt, welche konkreten Anforderungen zukünftig an die Bereitstellung der Funktion gestellt werden, sodass die Verarbeitungseinrichtung in einem benötigten Aspekt trotzdem unterdimensioniert sein kann. Folgende Publikationen offenbaren die Verwendung von Sensoren in Haushaltsgeräten durch Mobilgeräte:
- "SOUL: An Edge-Cloud System for Mobile Applications in a Sensor-Rich World", in 2016 IEEE/ACM SYMPOSIUM ON EDGE COMPUTING (SEC), IEEE, 27. Oktober 2016, von JANG MINSUNG ET AL,
- "Integrating remote sensors in a smartphone: The project "sensors for ANDROID in embedded systems" in 2016 IEEE SENSORS APPLICATIONS SYMPOSIUM (SAS), IEEE, 20. April 2016, von RINALDI STEFANO ET AL und
- "Sensor Virtualization Module: Virtualizing loT Devices on Mobile Smartphones for Effective Sensor Data Management", in INTERNATIONAL JOURNAL OF DISTRIBUTED SENSOR NETWORKS, Bd. 2015, 4. Oktober 2015, von JEONGGIL KO ET AL.

DE102010060650 A1 offenbart die Darstellung eines Kochrezepts in einem Haushaltsgerät.

Eine der vorliegenden Erfindung zugrunde liegende Aufgabe liegt in der Bereitstellung einer verbesserten Technik zur Kopplung eines Haushaltsgeräts mit einem Mobilgerät. Die Erfindung kann diese Aufgabe beispielsweise mittels der Gegenstände der unabhängigen Ansprüche lösen. Unteransprüche können bevorzugte Ausführungsformen wiedergeben.

Nach einem Aspekt der vorliegenden Erfindung umfasst ein erstes Verfahren Schritte des drahtlosen Koppelns eines Haushaltsgeräts mit einem Mobilgerät; und des Bereitstellens eines Sensors des Haushaltsgeräts als lokales Gerät des Mobilgeräts für eine auf dem Mobilgerät ablaufende Funktion. Der Sensor kann als Sensormodul ausgebildet sein und als Eingabe- und/oder Ausgabegerät ansprechbar sein. Insbesondere kann mittels der Ausgabefunktion ein Verhalten des Sensors konfiguriert werden. Auch ein Ausgabegerät, ein Eingabegerät oder eine Kombination aus einem Eingabegerät und einem Ausgabegerät können dem Mobilgerät als lokales Gerät zur Verfügung gestellt werden.

Im Sinne der Erfindung kann der Sensor des Haushaltsgeräts durch eine Funktion, beispielsweise eine Applikation ("App"), die auf dem Mobilgerät abläuft, im Wesentlichen so verwendet werden, als wäre der Sensor vom Mobilgerät umfasst. Für die Funktion kann der physische Anbringungsort des Sensors irrelevant oder nicht bestimmbar sein. Durch diese Art der Bereitstellung kann der Sensor einer weiteren Nutzung zugeführt werden. Dazu kann der Sensor durch ein Betriebssystem des Mobilgeräts verfügbar gemacht werden, beispielsweise in Form einer lesbaren und/oder schreibbaren Gerätedatei. In einer Ausführungsform kann das Haushaltsgerät über keine Funktion verfügen, die Gebrauch von dem Sensor macht, abgesehen von der Bereitstellung des Sensors für das Mobilgerät. Der Sensor beziehungsweise ein durch ihn erhebbarer Sensorwert ist üblicherweise mit einer Funktion des Haushaltsgeräts verbunden.

Die Funktion des Haushaltsgeräts kann eine Hauptfunktion oder eine Hilfsfunktion betreffen. Eine Hauptfunktion einer Spülmaschine umfasst beispielsweise das Reinigen von Geschirr; eine Hilfsfunktion könnte ein Planen eines Reinigungszeitpunkts oder ein Nachbestellen von Reinigungsmittel umfassen. Die Hilfsfunktion ist für die Hauptfunktion nicht immer erforderlich. Sollte die Hilfsfunktion nicht erbracht werden können, so kann die Hauptfunktion üblicherweise noch weiter verwendet werden. Häufig kann die Hilfsfunktion auch auf eine andere Weise als mittels des Haushaltsgeräts erbracht werden. In obigem Beispiel könnte etwa die Beschaffung von Reinigungsmittel auch durch eine Person erfolgen. Die Hauptfunktion charakterisiert üblicherweise das Haushaltsgerät; sollte die Hauptfunktion ausfallen so kann das Haushaltsgerät seinen Zweck üblicherweise nicht mehr erfüllen, eine Hilfsfunktion kann nicht mehr ablaufen oder zwecklos werden. Beispielsweise wäre das Planen eines Reinigungszeitpunkts zwecklos, wenn die Reinigungsfunktion nicht erbracht werden kann.

Mittels der vorliegenden Erfindung kann beispielsweise ein Strichcode-Leser, der an einem Kühlschrank angebracht ist, von einer auf dem Mobilgerät ablaufenden Funktion genutzt werden, die einen Lagerbestand von Lebensmitteln in einem Haushalt verwaltet.

Der Sensor ist dazu eingerichtet, einen Bereich des Haushaltsgeräts abzutasten und einen Sensorwert bereitzustellen; wobei der Sensorwert an das Mobilgerät übermittelt und der Funktion bereitgestellt wird. Der Bereich kann in einem Umfeld des Haushaltsgeräts liegen, wobei wenn der Sensor beispielsweise eine Kamera oder einen Radar- oder LiDAR Sensor umfassen kann. Der Bereich kann auch innerhalb des Haushaltsgeräts liegen, wobei der Sensor etwa einen Schalter oder einen Temperatursensor umfassen kann. Eine Funktion des Haushaltsgeräts kann auf der Basis eines vom Sensor bereitgestellten Sensorwerts gesteuert werden. Der Sensor kann kabelgebunden oder drahtlos mit dem Haushaltsgerät gekoppelt sein.

Der Sensor kann in Abhängigkeit einer vorbestimmten Richtlinie bereitgestellt werden, die auch Policy genannt werden kann. So kann insbesondere festgelegt werden, welche Funktion Zugriff auf welches Haushaltsgerät oder welchen Sensor haben soll, unter welchem Benutzer eine auf den Sensor zugreifende Funktion laufen soll oder welche Art von Zugriff auf den Sensor gewährt werden soll. Die Richtlinie kann als einfache wenn-dann-Angabe erfolgen oder es kann ein Regelwerk hinterlegt sein, das ein Zugriffsrecht auf der Basis eines oder mehrerer Parameter bestimmt.

Das Bereitstellen des Sensors an die Funktion kann durch einen Benutzer des Mobilgeräts steuerbar sein. In einer ersten Variante kann der Benutzer eine Voreinstellung zu Zugriffsrechten hinterlegen; in einer zweiten Variante kann der Benutzer interaktiv Zugriffsrechte gewähren oder verweigern. Beispielsweise kann vor einem Zugriff der Funktion auf den Sensor eine Bestätigung des Benutzers eingeholt werden.

Die Richtlinie kann auch von einer zentralen Stelle bezogen werden. Die zentrale Stelle kann das Haushaltsgerät oder mehrere Haushaltsgeräte verwalten, die bevorzugt von einem gemeinsamen Haushalt umfasst sind. So können Berechtigungen, die ein Zusammenspiel von Haushaltsgeräten untereinander und mit einem Mobilgerät steuern, an einer zentralen Stelle hinterlegt werden. Eine Konsistenzprüfung oder Änderung einer Richtlinie kann so verbessert erfolgen. Sollte ein Haushaltsgerät neu verfügbar werden, so können dessen Fähigkeiten verbessert an die der bestehenden Haushaltsgeräte angepasst werden.

Das Verfahren kann ferner ein Steuern eines Abtastkriteriums oder Parameters des Sensors durch die Funktion umfassen. Für die Steuerung kann eine Übermittlung eines Parameters vom Mobilgerät an das Haushaltsgerät erforderlich sein. Die Steuerung kann vorgeben, auf welche Weise der Sensor genutzt wird oder eine Randbedingung bei der Nutzung einstellen. Das Setzen eines solchen Parameters kann durch die Richtlinie auf vorbestimmte Bedingungen abgestimmt werden. Handelt es sich bei dem Sensor beispielsweise um eine Kamera, so kann der Parameter etwa eine Farbe, eine Helligkeit, einen Kontrast, eine Ausrichtung, eine Brennweite, eine Beleuchtung, eine Wiederholrate oder einen Auslösezeitpunkt betreffen.

Nach einem weiteren Aspekt der vorliegenden Erfindung umfasst ein zweites Verfahren Schritte des drahtlosen Koppelns eines Haushaltsgeräts mit einem Mobilgerät; des Empfangens einer Nachricht durch das Mobilgerät; des Übermittelns eines Hinweises auf die empfangene Nachricht vom Mobilgerät an das Haushaltsgerät; und des Bereitstellens des Hinweises seitens des Haushaltsgeräts an einen Benutzer. Dieser Aspekt ist nicht notwendigerweise vom oben genannten ersten Aspekt der Erfindung abhängig, kann aber mit diesem zusammen implementiert werden.

Die Nachricht kann initiativ von einer externen Stelle ausgesandt werden, auch ohne dass sie vom Mobilgerät explizit angefordert worden wäre ("Push-Nachricht"). Eine solche Nachrichte kann etwa eine SMS, ein E-Mail, eine WhatsApp-Nachricht oder einen RSS-Feed umfassen. Die Nachricht selbst kann an der externen Stelle gehalten oder an das Mobilgerät weitergeleitet werden. Der Hinweis kann beispielsweise angeben, welcher Art die Nachricht ist, wer der Absender ist, wie viele Nachrichten vorliegen oder wann eine Nachricht abgesandt wurde. Die Nachricht selbst wird bevorzugt zunächst nicht an das Haushaltsgerät weitergeleitet. So kann ein Benutzer, der sich beispielsweise mit einer Aufgabe beschäftigt, für die er das Haushaltsgerät benutzt oder während der er sich zumindest in dessen Nähe aufhält (z.B. Kochen), zeitnah vom Vorliegen einer Nachricht informiert werden. Beispielsweise kann man kurz beim Kochen informiert werden, dass einem die Mutter eine WhatsApp-Nachricht gesendet hat.

Das Übermitteln kann in Abhängigkeit einer vorbestimmten Richtlinie erfolgen. Die Richtlinie kann ähnlich wie oben beschrieben ausgestaltet sein. Beispielsweise kann die Richtlinie vorgeben, über welche Nachricht welcher Benutzer an welchem Haushaltsgerät hingewiesen werden soll.

Die Nachricht kann auch am Haushaltsgerät bereitgestellt werden. Dazu kann ein Benutzer das Herunterladen der Nachricht in Antwort auf den Hinweis steuern oder die Nachricht kann zusammen mit dem Hinweis an das Haushaltsgerät übermittelt werden.

Hierfür kann das Haushaltsgerät bspw. mit einem Sprachinterface, z.B. mit einem Smart Speaker wie einem Amazon Alexa Echo, gekoppelt sein. Ein an das Haushaltsgerät übermittelter Inhalt kann in Abhängigkeit einer vorbestimmten Richtlinie angepasst werden. So können beispielsweise eine vorbestimmte Art von Hinweis (z. B. SMS oder WhatsApp), ein bestimmtes Datenformat (z. B. PDF oder MP3) oder eine Nachricht von einem vorbestimmten Sender nicht übermittelt werden. Das Haushaltsgerät kann so vor der Ausführung eines potentiell gefährlichen Inhalts geschützt werden. Ressourcen des Haushaltsgeräts können geschont werden. Nicht darstellbare Informationen können gar nicht erst an das Haushaltsgerät übermittelt werden. Eine Hauptfunktion des Haushaltsgeräts kann verbessert zugänglich bleiben.

In einer Ausführungsform erfolgt ein automatisches Koppeln des Mobilgeräts mit dem Haushaltsgerät, falls ein Hinweis zu übermitteln ist. Die Kopplung kann nach dem Übermitteln des Hinweises auch wieder automatisch getrennt werden.

Nach einem weiteren Aspekt der vorliegenden Erfindung umfasst ein Haushaltsgerät einen Sensor; eine Kommunikationseinrichtung zur drahtlosen Kommunikation; und eine Verarbeitungseinrichtung. Dabei ist die Verarbeitungseinrichtung dazu eingerichtet, das Mobilgerät drahtlos mit dem Haushaltsgerät zu koppeln, und dazu, einen mittels des Sensors erfassten Sensorwert dem Mobilgerät bereitzustellen.

Nach noch einem weiteren Aspekt der vorliegenden Erfindung umfasst ein Mobilgerät eine Kommunikationseinrichtung zur drahtlosen Kommunikation; und eine Verarbeitungseinrichtung. Dabei ist die Verarbeitungseinrichtung dazu eingerichtet, das Mobilgerät drahtlos mit dem Haushaltsgerät mit einem Sensor zu koppeln und dazu, den Sensor als lokales Gerät an eine auf dem Mobilgerät ablaufende Funktion bereitzustellen.

Nach wieder einem weiteren Aspekt der Erfindung umfasst ein System ein hierin beschriebenes Haushaltsgerät und ein hierin beschriebenes Mobilgerät. Merkmale des Systems können auf ein Haushaltsgerät und/oder Mobilgerät übertragen werden oder umgekehrt.

Nach noch einem weiteren Aspekt der vorliegenden Erfindung umfasst ein Haushaltsgerät eine drahtlose Kommunikationseinrichtung; eine Ausgabevorrichtung; eine Eingabevorrichtung; und eine Verarbeitungseinrichtung. Dabei ist die Verarbeitungseinrichtung dazu eingerichtet, ein Mobilgerät drahtlos mit dem Haushaltsgerät zu koppeln, eine Ausgabe des Mobilgeräts mittels der Ausgabevorrichtung bereitzustellen und eine Eingabe an der Eingabevorrichtung an das Mobilgerät bereitzustellen.

Es wurde erkannt, dass zur Ausführung einer zusätzlichen Funktion, die am Haushaltsgerät erbracht werden kann, ein Mobilgerät eine passendere Plattform als eine Verarbeitungseinrichtung des Haushaltsgeräts darstellen kann. Das Haushaltsgerät kann relativ einfach als "unintelligentes Endgerät" (dumb terminal) ausgeführt sein, das lediglich Ausgaben des Mobilgeräts an einen Benutzer, und Eingaben des Benutzers an das Mobilgerät übermitteln kann.

Die zusätzliche Funktion kann auf dem Mobilgerät verbessert gepflegt, aktualisiert oder mit einem externen Datenbestand synchronisiert werden. Dazu kann das Mobilgerät insbesondere ein Smartphone umfassen. Sollte ein Leistungsbedarf der Funktion die Leistungsfähigkeit des Mobilgeräts übersteigen, kann dieses relativ einfach aktualisiert werden. Das aktualisierte Mobilgerät kann in der gleichen Weise wie das ursprüngliche mit dem Haushaltsgerät gekoppelt werden. So kann das Haushaltsgerät lange benutzt werden, ohne signifikante Einschränkungen bei der Nutzbarkeit der Funktion hinnehmen zu müssen.

Das Haushaltsgerät kann beide Richtungen der Interaktion mit einem Benutzer unterstützen, sodass das Mobilgerät zur Nutzung der Funktion durch den Benutzer nicht direkt bedient werden muss. Der Benutzer kann das Mobilgerät beispielsweise bei sich tragen oder in eine Ladestation einsetzen und die Funktion am Haushaltsgerät benutzen. Dabei kann die Funktion in einem Zusammenhang mit der Benutzung des Haushaltsgeräts stehen, beispielsweise indem das Haushaltsgerät zur Zubereitung einer Speise verwendet werden kann und die Funktion die Darstellung eines Kochrezepts umfasst. Der Zusammenhang kann auch indirekt sein, etwa wenn die Funktion einen Kalender umfasst, und die Fertigstellung einer Speise auf einen Termin im Kalender abgestimmt werden soll. In noch einer Ausführungsform besteht kein klassischer funktionaler Zusammenhang, beispielsweise wenn das Haushaltsgerät einen Kühlschrank umfasst und die Funktion das Abspielen von Musik betrifft. Trotzdem kann ein Benutzer beide Funktionalitäten zur selben Zeit und am selben Ort nutzen.

In einer Ausführungsform macht das Haushaltsgerät keine Vorgaben für die Art der zusätzlichen Funktion, sodass praktisch beliebige Funktionen des Mobilgeräts mittels des Haushaltsgeräts benutzt werden können. So kann etwa eine erste Funktion des Mobilgeräts ereignisgesteuert durch eine zweite unterbrochen oder abgelöst werden, etwa wenn das Abspielen von Musik unterbrochen wird, weil ein Telefonanruf entgegengenommen werden soll.

Die Eingabevorrichtung des Haushaltsgeräts ist üblicherweise zur unmittelbaren Betätigung durch den Benutzer eingerichtet und kann etwa einen Taster, einen Schalter, einen Drehknopf oder einen Touchscreen umfassen. In einer weiteren Ausführungsform kann die Eingabevorrichtung auch zur mittelbaren Betätigung vorgesehen sein und beispielsweise einen Strichcode-Leser umfassen, dem der Benutzer einen Strichcode präsentieren kann, etwa von einer Lebensmittelverpackung, sodass der Strichcode-Leser in Abhängigkeit des erfassten Strichcodes eine Eingabe bereitstellt. Weitere beispielhafte Eingabevorrichtungen, die in Verbindung mit der hierin vorgestellten Technik verwendet werden können, umfassen eine Gestenerkennung, einen olfaktorischen Sensor (VOC: volatile organic compound) oder einen Beschleunigungssensor.

Die Ausgabevorrichtung umfasst bevorzugt einen optischen Ausgabebereich, der textuelle, numerische, alphanumerische oder grafische Ausgaben bereitstellen kann. Dazu kann die Ausgabevorrichtung insbesondere eine Anzeige oder einen Projektor umfassen. Die Ausgabevorrichtung kann aber auch eine andere Ausgabe an den Benutzer unterstützen, beispielsweise eine akustische oder haptische Ausgabe.

Die Ausgabevorrichtung kann eine optische Anzeige mit wenigstens zwei Anzeigebereichen umfassen. Dabei kann Verarbeitungseinrichtung dazu eingerichtet sein, auf einem ersten Anzeigebereich eine Information des Haushaltsgeräts darzustellen und auf einem zweiten Anzeigebereich die Ausgabe des Mobilgeräts darzustellen.

Durch die Unterteilung der Ausgabevorrichtung in Bereiche können eine Funktion des Haushaltsgeräts und eine Funktion des Mobilgeräts einem Benutzer parallel zueinander zugänglich gemacht sein. Die Information kann insbesondere einen Betriebsparameter oder einen Arbeitszustand des Haushaltsgeräts betreffen, sodass das Haushaltsgerät unabhängig von einer Funktion des Mobilgeräts kontrollierbar bleiben kann. In einer ersten Variante können die Anzeigebereiche nebeneinander liegen und in einer zweiten Variante kann einer der Anzeigenbereiche einen anderen überlagern. Sollen mehr als eine Funktion des Mobilgeräts am Haushaltsgerät unterstützt werden, so können hierfür entsprechend viele Anzeigenbereiche auf der Ausgabevorrichtung gebildet werden. Bevorzugt ist der Anzeigenbereich für die Funktion des Haushaltsgeräts immer sichtbar, während ein Anzeigenbereich für eine Funktion des Mobilgeräts auf der Ausgabevorrichtung auch verkleinert, verdeckt oder ausgeblendet werden kann. So können beispielsweise drei Anzeigebereiche gebildet sein, von denen einer der Information des Haushaltsgeräts und ein anderer einer Funktion des Mobilgeräts zugeordnet sein kann. Der dritte Anzeigebereich kann einer oder mehreren Funktionen des Mobilgeräts zugeordnet sein, wobei die Zuordnung einer Funktion zum Anzeigebereich ereignisbasiert oder durch den Benutzer gesteuert werden kann.

Die Eingabevorrichtung kann ein erstes und ein zweites Bedienelement umfassen, wobei die Verarbeitungseinrichtung dazu eingerichtet ist, eine Funktion des Haushaltsgeräts in Abhängigkeit einer Betätigung des ersten Bedienelements zu steuern und eine Betätigung des zweiten Bedienelements an das Mobilgerät bereitzustellen. So kann eine unmittelbare Steuerbarkeit des Haushaltsgeräts unabhängig von der Steuerung einer Funktion des Mobilgeräts sichergestellt sein. Insbesondere wenn das Haushaltsgerät einen potenziell gefährlichen Vorgang durchführen kann, beispielsweise ein Erhitzen, ein Kneten oder Schnitzeln, kann die Nutzung der Funktion des Mobilgeräts eine Bedien- oder Benutzungssicherheit des Haushaltsgeräts nicht beeinträchtigen.

Die Verarbeitungseinrichtung kann ferner dazu eingerichtet sein, zwei voneinander unabhängige drahtlose Datenverbindungen herzustellen, von denen eine einer Ausgabe des Mobilgeräts und die andere einer Eingabe an das Mobilgerät zugeordnet ist. Die Datenverbindungen können unterschiedliche Standards nutzen, sodass eine Verwendung eines bekannten Mobilgeräts erleichtert sein kann. Beispielsweise kann eine Ausgabe des Mobilgeräts mittels Miracast, Airplay, Google Cast, Screen Mirroring, VLC oder Wireless Display (WiDi) übermittelt werden, während eine Eingabe an das Mobilgerät etwa erfolgen kann, indem das Haushaltsgerät als Bluetooth-Eingabevorrichtung mit dem Mobilgerät gekoppelt wird. Für die unterschiedlichen Datenverbindungen können auch unterschiedliche Technologien verwendet werden, beispielsweise WLAN, Bluetooth, ZigBee oder Infrarot-Übertragung. In einer besonders bevorzugten Ausführungsform benutzt eine der Datenverbindungen das Home Connect Protokoll, das auch verwendet werden kann, um mehrere Haushaltsgeräte miteinander zu vernetzen.

Die Verarbeitungseinrichtung kann dazu eingerichtet sein, die Kopplung mit dem Mobilgerät nur dann durchzuführen, wenn ein Abstand des Mobilgeräts zum Haushaltsgerät einen ersten vorbestimmten Schwellenwert unterschreitet. Die Kopplung kann automatisch erfolgen, wenn sich ein Benutzer, der das Mobilgerät bei sich trägt, dem Haushaltsgerät nähert. Ein Eingreifen des Benutzers, beispielsweise um den Kopplungsvorgang zu bestätigen oder zu erlauben, kann nicht erforderlich sein. In einer weiteren Ausführungsform kann eine Bestätigung nur seitens des Haushaltsgeräts erforderlich sein. In noch einer weiteren Ausführungsform kann eine Bestätigung erforderlich sein, aber für eine vorbestimmte Zeit gelten, in der dann für eine erneute Kopplung keine erneute Bestätigung gegeben werden muss. Durch die automatische Kopplung kann die Oberfläche der Funktion des Mobilgeräts dem Benutzer folgen, wenn sich dieser in einem Haushalt mit mehreren Haushaltsgeräten bewegt, die eine hierin beschriebene Kopplung anbieten.

Die Verarbeitungseinrichtung kann dazu eingerichtet sein, eine bestehende Kopplung zu einem Mobilgerät aufzulösen, wenn ein Abstand des Mobilgeräts zum Haushaltsgerät einen zweiten vorbestimmten Schwellenwert überschreitet, der größer als der erste Schwellenwert ist. Die Kopplung kann entfernungsgesteuert mit einer vorbestimmten Hysterese erfolgen. Dadurch kann sichergestellt werden, dass ein Koppeln und ein Auflösen der Kopplung nicht in rascher Folge durchgeführt werden, wenn sich das Mobilgerät in einer Entfernung nahe dem ersten Schwellenwert zum Haushaltsgerät befindet.

Es ist zu beachten, dass eine hierin beschriebene Kopplung in einer Ausführungsform die Herstellung einer Datenverbindung umfassen kann, also beispielsweise im ISO/OSI-Modell auf einer oder mehreren der Schichten 1 bis 7, während in einer anderen Ausführungsform eine Kopplung lediglich die Darstellung der Ausgabe beziehungsweise die Übermittlung der Eingabe betrifft, die jeweils eine hergestellte Datenverbindung voraussetzen. Anders ausgedrückt kann eine hergestellte Datenverbindung zwischen dem Haushaltsgerät und dem Mobilgerät auch erhalten bleiben, wenn das Mobilgerät weiter als durch den zweiten Schwellenwert vorgegeben ist vom Haushaltsgerät entfernt wird, jedoch können in diesem Fall Ausgaben des Mobilgeräts unterdrückt oder Eingaben an das Mobilgerät nicht weitergeleitet werden.

Die Verarbeitungseinrichtung kann außerdem dazu eingerichtet sein, ein weiteres Mobilgerät drahtlos mit dem Haushaltsgerät zu koppeln, eine Ausgabe des weiteren Mobilgeräts mittels der Ausgabevorrichtung bereitzustellen und eine Eingabe an der Eingabevorrichtung an das weitere Mobilgerät bereitzustellen. So können mehrere Mobilgeräte, die insbesondere verschiedenen Benutzer zugeordnet sein können, gleichzeitig mit dem Haushaltsgerät gekoppelt werden. Das Haushalsgerät kann eine gleichzeitige Nutzung von Funktionen beider Mobilgeräte unterstützen.

Insbesondere kann Verarbeitungseinrichtung dazu eingerichtet sein, eine Zuordnung von Ausgaben der Mobilgeräte an die Ausgabevorrichtung und/oder eine Zuordnung von Eingaben an das Mobilgerät vorzunehmen. Die Zuordnung kann auf der Basis von Regeln erfolgen. Eine Regel kann ein Ereignis berücksichtigen, beispielsweise eine aktuelle Entfernung eines Mobilgeräts vom Haushaltsgerät. Die Zuordnung oder eine Regel kann durch einen Benutzer gesteuert werden. Unterschiedliche Benutzer können unterschiedliche Regeln aufstellen. In einer Ausführungsform können mehrere Funktionen unterschiedlicher Mobilgeräte gleichzeitig über das Haushaltsgerät gesteuert werden. In einer anderen Ausführungsform kann jeweils nur eine Funktion gesteuert werden, wobei diese aus mehreren möglichen Funktionen der Mobilgeräte ausgewählt werden kann. Es ist bevorzugt, dass die Mobilgeräte datentechnisch voneinander getrennt sind, sodass eine Einflussnahme von einem Mobilgerät auf ein anderes der Mobilgeräte aus nicht durch das Haushaltsgerät erfolgen kann.

Nach einem weiteren Aspekt der vorliegenden Erfindung umfasst ein System mehrere hierin beschriebenen Haushaltsgeräte, wobei Verarbeitungseinrichtungen der Haushaltsgeräte jeweils dazu eingerichtet sind, einen Abstand des zugeordneten Haushaltsgeräts zum Mobilgerät zu bestimmen, wobei nur eine Eingabe vom nächstgelegenen Haushaltsgerät an das Mobilgerät bereitgestellt wird. Dadurch kann ein Benutzer ein Mobilgerät bei sich tragen und eine darauf ablaufende Funktion von jeweils dem Haushaltsgerät aus steuern, das ihm am nächsten ist. Eine Bedienoberfläche für die Funktion kann dem Benutzer im Haushalt von Gerät zu Gerät folgen. Unterstützen die Haushaltsgeräte die Kopplung mit mehreren Mobilgeräten, so können mehrere Benutzer gleichzeitig im Haushalt mobil sein und ihnen jeweils zugeordnete Funktionen bequem und elegant über die Haushaltsgeräte steuern.

Zur Bestimmung, welches Haushaltsgerät einem Mobilgerät am nächsten ist, können die Haushaltsgeräte datentechnisch miteinander verbunden sein. Dazu kann eine drahtlose oder eine drahtgebundene Variante verwendet werden. Die Haushaltsgeräte können auch über eine zentrale Komponente, etwa einen Router oder einen Server, miteinander verbunden sein. Die Haushaltsgeräte können insbesondere mittels Home Connect miteinander verbunden sein. In einer Ausführungsform können die Haushaltsgeräte jeweils bestimmte Abstände zu einem Mobilgerät untereinander austauschen. Ein Haushaltsgerät kann einem anderen mitteilen, wenn es eine Funktion des Mobilgeräts steuern oder die Steuerung abgeben möchte.

Nach noch einem weiteren Aspekt der Erfindung umfasst ein weiteres System mehrere hierin beschriebene Haushaltsgeräte, wobei Verarbeitungseinrichtungen der Haushaltsgeräte jeweils dazu eingerichtet sind, eine Ausgabe des Mobilgeräts mittels einer zugeordneten Ausgabevorrichtung bereitzustellen. Die Ausgabe kann beispielsweise auf allen Haushaltsgeräten eines Haushalts oder eines Zimmers des Haushalts erfolgen. In einer Ausführungsform erfolgt eine Ausgabe auf allen Haushaltsgeräten, deren Entfernung zum Mobilgerät unter einem vorbestimmten Schwellenwert liegt.

Nach wieder einem weiteren Aspekt der vorliegenden Erfindung umfasst ein drittes Verfahren zum Steuern eines Haushaltsgeräts Schritte des Herstellens einer drahtlosen Kopplung des Haushaltsgeräts mit einem Mobilgerät; des Erfassens einer Eingabe an einer Eingabevorrichtung des Haushaltsgeräts und Bereitstellen der Eingabe an das Mobilgerät; und des Erfassens einer Ausgabe des Mobilgeräts und des Bereitstellens der Ausgabe mittels einer Ausgabevorrichtung des Haushaltsgeräts.

Ein Auf- und/oder Abbau der drahtlosen Kopplung und der Übermittlung von Eingaben und/oder Ausgaben zwischen dem Haushaltsgerät und dem Mobilgerät können von weiteren Faktoren abhängig sein, wie hierin beispielsweise bezüglich eines Haushaltsgeräts und eines Systems mit wenigstens einem Haushaltsgerät beschrieben ist.

Nach noch einem weiteren Aspekt der Erfindung umfasst ein Haushaltsgerät eine Kommunikationseinrichtung zur drahtlosen Kommunikation; eine Ausgabevorrichtung; und eine Verarbeitungseinrichtung. Dabei ist die Verarbeitungseinrichtung dazu eingerichtet, ein Mobilgerät drahtlos mit dem Haushaltsgerät zu koppeln und eine Ausgabe des Mobilgeräts auf der Basis eines vorbestimmten Regelwerks auf der Ausgabevorrichtung bereitzustellen.

Auf der Basis des Regelwerks kann bestimmt werden, welche Ausgabe auf der Ausgabevorrichtung erscheinen soll, und welche nicht. So kann beispielsweise einem Missbrauch des Haushaltsgeräts durch ein nicht autorisiertes Mobilgerät vorgebeugt werden. Außerdem kann eine Überfüllung der Ausgabevorrichtung durch empfangene Inhalte verhindert werden. Beispielsweise kann ein vorbestimmter Abschnitt der Ausgabevorrichtung zur Darstellung eines Parameters reserviert sein, der eine Steuerung einer Funktion des Haushaltsgeräts zugeordnet ist. Handelt es sich bei der Ausgabevorrichtung um einen berührungsempfindlichen Bildschirm (Touchscreen), so kann gleichzeitig eine Bedienbarkeit der Funktion sichergestellt sein. Das Haushaltsgerät kann unabhängig von der Bereitstellung einer empfangenen Ausgabe durch einen Benutzer steuerbar bleiben. In einer weiteren Ausführungsform kann die Steuerbarkeit genutzt werden, um das Regelwerk zu verändern, sodass ein auf der Ausgabevorrichtung bereitgestellter Inhalt durch einen Benutzer stets steuerbar bleiben kann.

Die Verarbeitungseinrichtung ist bevorzugt dazu eingerichtet, das Regelwerk von einer externen Stelle herunterzuladen oder zu aktualisieren. Die externe Stelle kann insbesondere einen zentralen Server oder einen Dienst umfassen, der beispielsweise in einer Cloud realisiert sein kann. Die externe Stelle kann mittels kryptografischer Verfahren authentisiert werden, sodass ein Herunterladen eines kompromittierten Regelwerks verhindert werden kann. Die Verarbeitungseinrichtung kann zur Kopplung eines weiteren Mobilgeräts eingerichtet sein, wobei eine Priorität von Ausgaben der Mobilgeräte auf der Basis des Regelwerks bestimmt werden kann. Prinzipiell können beliebig viele Mobilgeräte mit dem Haushaltsgerät gekoppelt werden. Ein zur Anzeige von Inhalten verfügbarer Platz auf einer optischen Ausgabevorrichtung ist beschränkt, sodass durch die Priorisierung der Ausgaben sichergestellt werden kann, dass eine oder mehrere der Ausgaben angemessen groß dargestellt werden, während andere möglicherweise nur teilweise oder gar nicht dargestellt werden.

In einer Ausführungsform wird eine Ausgabe eines Mobilgeräts bereitgestellt, falls keine höher priorisierte Ausgabe zur Bereitstellung vorliegt. Anders ausgedrückt kann zu jedem Zeitpunkt nur eine Ausgabe mit der höchsten Priorität bereitgestellt werden. Niedriger priorisierte Ausgaben können so lange nicht dargestellt werden, bis sie nicht selbst höchst priorisiert sind. Eine Ausgabe kann beispielsweise durch eine Bestätigung eines Benutzers von der Ausgabevorrichtung entfernt werden.

In noch einer weiteren Ausführungsform wird eine Ausgabe eines Mobilgeräts einer niedriger priorisierten Ausgabe durch eine höher priorisierte Ausgabe überlagert. Die Überlagerung kann insbesondere grafisch erfolgen. Die höher priorisierte Ausgabe kann beispielsweise in Form eines eingeblendeten Fensters, eines Modaldialogs oder einer Nachricht im Vordergrund bereitgestellt sein.

Das Regelwerk kann auf der Basis von vorbestimmten Angaben definiert sein, wobei jede Angabe in Form einer Liste vorgegeben sein kann. Beispielsweise kann das Regelwerk eine erste Angabe von Mobilgeräten umfassen, deren Ausgaben auf der Ausgabevorrichtung nicht bereitgestellt werden dürfen. Die erste Angabe kann auch Negativliste, Schwarze Liste oder Blacklist genannt werden. Eine Identifikation des Mobilgeräts wird üblicherweise beim Herstellen der Kopplung zum Haushaltsgerät bestimmt und kann bei der Übertragung von Informationen wiederholt werden. Mittels der ersten Angabe kann beispielsweise ein Mobilgerät von der Ausgabevorrichtung ausgeschlossen werden, das als böswillig eingestuft ist.

Das Regelwerk kann eine zweite Angabe von Mobilgeräten umfassen, deren Ausgaben auf der Ausgabevorrichtung bereitgestellt werden dürfen. In Form einer Liste kann die zweite Angabe auch als Positivliste, Weiße Liste oder Whitelist bezeichnet werden.

Das Regelwerk kann eine dritte Angabe von Funktionen eines Mobilgeräts umfassen, deren Ausgaben auf der Ausgabevorrichtung bereitgestellt werden dürfen. Anders ausgedrückt kann die dritte Angabe eine Positivliste für Funktionen umfassen. Eine Funktion eines Mobilgeräts kann durch ein Programm oder eine Applikation ("App") bereitgestellt sein. In entsprechender Weise kann auch eine Negativliste für Funktionen eines Mobilgeräts bereitgestellt sein.

Das Regelwerk kann eine vierte Angabe von Inhalten umfassen, die auf der Ausgabevorrichtung bereitgestellt werden dürfen. Erlaubte Inhalte können beispielsweise Text oder Grafiken betreffen. Dabei kann jeweils beispielsweise ein Umfang, eine Größe, eine Auflösung, eine Farbtiefe oder ein Inhalt bestimmt sein, der auf der Ausgabevorrichtung bereitgestellt werden darf. In Form einer Liste kann die vierte Angabe eine Positivliste von Inhalten betreffen. Dementsprechend kann auch eine Negativliste von Inhalten bereitgestellt sein, die nicht auf der Ausgabevorrichtung bereitgestellt werden dürfen.

Es ist zu beachten, dass unterschiedliche Angaben bzw. Listen vom Regelwerk umfasst sein können. Dabei können die Angaben in einer vorbestimmten Reihenfolge berücksichtigt werden. Die Angaben können insbesondere nach Art einer Firewall für ein Computernetzwerk durchgegangen werden, wobei eine Angabe, die auf eine empfangene Ausgabe anwendbar ist, optional unmittelbar angewendet werden kann, ohne weitere Angaben zu überprüfen. Eine passende positive Angabe kann zur unmittelbaren Bereitstellung der Ausgabe auf der Ausgabevorrichtung führen, während eine anwendbare negative Angabe unmittelbar zur Zurückweisung der Ausgabe führen kann.

In entsprechender Weise, wie eine Ausgabe des Mobilgeräts an das Haushaltsgerät übermittelt und dort bereitgestellt wird, kann eine Eingabe am Haushaltsgerät an das Mobilgerät übermittelt und dort verarbeitet werden. In einer Ausführungsform kann auch eine am Haushaltsgerät erfasste Eingabe einer Überprüfung durch das Regelwerk unterzogen werden.

Das Haushaltsgerät kann eine Eingabevorrichtung umfassen, wobei die Verarbeitungseinrichtung dazu eingerichtet ist, eine Eingabe an der Eingabevorrichtung auf der Basis des Regelwerks an das Mobilgerät bereitzustellen. In einer Ausführungsform sind einer Eingabe und einer Ausgabe unterschiedliche Regelwerke zugeordnet; in einer anderen Ausführungsform ist nur ein Regelwerk für Eingaben und Ausgaben definiert. Eine zurückgewiesene Eingabe oder Ausgabe kann verworfen werden oder die Übermittlung von Informationen mit der betreffenden Funktion bzw. dem betreffenden Mobilgerät kann abgebrochen werden.

Das Haushaltsgerät kann ferner eine Speichervorrichtung zur Aufnahme einer Eingabe umfassen, falls die drahtlose Verbindung oder Kopplung vorübergehend unterbrochen ist. Beispielsweise kann die Verbindung unterbrochen oder gestört sein, wenn eine Person, die das Mobilgerät mit sich führt, sich im Bereich des Haushaltsgeräts bewegt. Die vorübergehende Unterbrechung kann für das Haushaltsgerät und das Mobilgerät bzw. jeweils darauf ablaufenden Funktionen transparent sein. Die drahtlose Verbindung kann erst dann abgebaut werden, wenn sie über mehr als eine vorbestimmte Dauer unterbrochen bzw. gestört ist. Dann kann beispielsweise das Haushaltsgerät einen durch eine Ausgabe des Mobilgeräts belegten Platz auf der Ausgabevorrichtung freigeben.

Nach wieder einem weiteren Aspekt der vorliegenden Erfindung umfasst ein System ein hierin beschriebenes Haushaltsgerät sowie ein Mobilgerät, die drahtlos miteinander gekoppelt sind. Über die Kopplung können eine Eingabe am Haushaltsgerät an das Mobilgerät übermittelt und dort verarbeitet werden. Außerdem kann eine Ausgabe des Mobilgeräts an das Haushaltsgerät übermittelt und dort an einen Benutzer bereitgestellt werden. Das Haushaltsgerät kann relativ einfach als "unintelligentes Endgerät" (Dumb Terminal) ausgeführt sein, das lediglich Ausgaben des Mobilgeräts an einen Benutzer und Eingaben des Benutzers an das Mobilgerät bereitstellen kann. Da die Ausführung der Funktion seitens des Mobilgeräts durchgeführt wird, kann das Haushaltsgerät bereits mit einer geringen Verarbeitungskapazität auskommen.

In einer Ausführungsform wird auf dem Mobilgerät eine erste Komponente zur Erzeugung der Ausgabe ausgeführt, und auf dem Haushaltsgerät eine zweite Komponente zur Bereitstellung der Ausgabe auf der Ausgabevorrichtung. Dabei sind das Haushaltsgerät und das Mobilgerät dazu eingerichtet, eine vorübergehend unterbrochene drahtlose Kopplung wiederherzustellen, ohne eine Funktion der ersten oder der zweiten Komponente zu beeinflussen. Anders ausgedrückt können das Mobilgerät und das Haushaltsgerät eine drahtlose Verbindung transparent auch bei vorübergehenden Störungen aufrechterhalten, ohne dass eine lesende oder schreibende Komponente seitens des Haushaltsgeräts oder seitens des Mobilgeräts von einer nur kurzfristigen Unterbrechung oder Störung informiert werden muss.

Nach noch einem weiteren Aspekt der vorliegenden Erfindung umfasst ein viertes Verfahren zum Bereitstellen einer Ausgabe eines Mobilgeräts auf einer Ausgabevorrichtung eines Haushaltsgeräts, das drahtlos mit dem Mobilgerät gekoppelt ist, Schritte des Empfangens einer Ausgabe des Mobilgeräts; des Prüfens, anhand eines vorbestimmten Regelwerks, ob die Ausgabe auf der Ausgabevorrichtung bereitgestellt werden darf; und des Bereitstellens der Ausgabe in Abhängigkeit eines Prüfungsergebnisses.

Nach wieder einem weiteren Aspekt der vorliegenden Erfindung umfasst ein fünftes Verfahren zum Bereitstellen einer Eingabe an einer Eingabevorrichtung eines Haushaltsgeräts, das drahtlos mit einem Mobilgerät gekoppelt ist, an das Mobilgerät, Schritte des Erfassens einer Eingabe an der Eingabevorrichtung; des Prüfens, anhand eines vorbestimmten Regelwerks, ob die Eingabe an das Mobilgerät bereitgestellt werden darf; und des Bereitstellens der Eingabe an das Mobilgerät in Abhängigkeit eines Prüfungsergebnisses. Das vierte und/oder fünfte Verfahren können jeweils auf einem Haushaltsgerät ausgeführt werden.

Nach einem weiteren Aspekt der vorliegenden Erfindung umfasst ein Haushaltsgerät eine Kommunikationseinrichtung zur drahtlosen Kommunikation; eine Ausgabevorrichtung; eine Einrichtung zur Bestimmung einer Entfernung zu einem Mobilgerät; eine Verarbeitungseinrichtung, die dazu eingerichtet ist, das Mobilgerät drahtlos mit dem Haushaltsgerät zu koppeln und dazu, eine Ausgabe des Mobilgeräts in Abhängigkeit der bestimmten Entfernung auf der Ausgabevorrichtung bereitzustellen.

Ein Benutzer kann das Mobilgerät bei sich tragen und sich frei im Bereich des Haushaltsgeräts bewegen. Eine Ausgabe des Mobilgeräts am Haushaltsgerät kann derart bereitgestellt werden, dass eine Wahrnehmung der Ausgabe an die Distanz des Benutzers zum Haushaltsgerät angepasst ist. Der Benutzer kann die Ausgabe verbessert erfassen und erforderlichenfalls verbessert darauf reagieren. Umfasst die Ausgabe beispielsweise eine Information, die eine Funktion des Haushaltsgeräts betrifft, so kann der Benutzer die Funktion verbessert steuern.

Die Einrichtung zur Bestimmung der Entfernung kann einen dedizierten Sensor wie einen Ultraschallsensor, einen Radarsensor oder einen LiDAR Sensor umfassen. In einer bevorzugten Ausführungsform ist die Einrichtung zur Bestimmung der Entfernung integriert mit der Kommunikationseinrichtung ausgeführt. Beispielsweise kann eine Entfernung zwischen dem Mobilgerät und dem Haushaltsgerät auf der Basis von Informationen bestimmt werden, die eine übliche Kommunikationseinrichtung bereits bestimmt. Beispielsweise bei der Kommunikation mittels WLAN oder Bluetooth kann eine solche Information anfallen oder gezielt bestimmt werden.

Die Kommunikationseinrichtung kann dazu eingerichtet sein, die Entfernung auf der Basis einer Stärke oder einer Störungsfreiheit eines vom Mobilgerät empfangenen drahtlosen Signals zu bestimmen. Die Stärke des empfangenen Signals wird auch RSS ("received signal strength") genannt und kann in Kenntnis der Stärke des ausgesandten Signals eine Bestimmung der Entfernung erlauben. Eine Störungsfreiheit kann als Signal-Rausch-Verhältnis (SNR: "signal to noise ratio") angegeben sein. Auch eine Fehlerrate bei der Übertragung von Informationen zwischen dem Haushaltsgerät und dem Mobilgerät kann zur Bestimmung der Störungsfreiheit betrachtet werden.

In einer Ausführungsform wird eine Entfernung zwischen den Geräten mittels einer Technologie bestimmt, die als Beacon bekannt ist. Dabei sendet eines der Geräte drahtlose Signale aus, die eine Nachricht enthalten. Die Nachricht kann Informationen bezüglich der Stärke des ausgesandten Signals, einer Position des Senders, einer Identifikation des Senders oder weitere Angaben umfassen. Dadurch kann die Entfernung in einem Bereich bestimmt werden, der bis ca. 20 Meter umfassen kann. Je kürzer die Entfernung ist, desto genauer kann die Bestimmung erfolgen. Ein Empfänger kann seine Position bezüglich einer Entfernung zu einem Beacon verbessert bestimmen. Eine Genauigkeit der bestimmten Position kann unterhalb von ca. einem Meter betragen.

Die Ausgabevorrichtung kann eine Anzeigeeinrichtung umfassen, wobei eine Größe, ein Detailreichtum oder eine Farbwahl der Ausgabe in Abhängigkeit der Entfernung gesteuert wird. Dabei kann die bereitgestellte Ausgabe an Fähigkeiten der Anzeigeeinrichtung angepasst werden, beispielsweise bezüglich einer Darstellungsgröße, einer Orientierung oder Anordnung von einzelnen Informationen. Ist eine Anzeigeeinrichtung zu klein, um vorbestimmte Informationen in einer gewünschten Größe vollständig anzuzeigen, so können die Informationen nach Art einer Laufschrift oder in einer vorbestimmten Abfolge nacheinander bereitgestellt werden.

Die Ausgabevorrichtung kann eine steuerbare Schallquelle umfassen, wobei eine Lautstärke der Ausgabe in Abhängigkeit der Entfernung gesteuert wird. So kann beispielsweise ein Audiodatenstrom so ausgegeben werden, dass er für den Benutzer immer gleich laut wahrgenommen wird, auch wenn er seine Position in einem Raum mit dem Haushaltsgerät verändert.

Nach noch einem weiteren Aspekt der vorliegenden Erfindung umfasst ein Mobilgerät eine Kommunikationseinrichtung zur drahtlosen Kopplung mit einem Haushaltsgerät, wobei das Mobilgerät dazu eingerichtet ist, eine bereitzustellende Ausgabe an das Haushaltsgerät zu übertragen.

Das Mobilgerät kann insbesondere dazu eingerichtet sein, eine Kopplung mit einem Haushaltsgerät nach einer vorbestimmten Richtlinie durchzuführen. Die Richtlinie kann beispielsweise steuern, welche Funktion oder Applikation, die das Mobilgerät ausführt, einem vorbestimmten Haushaltsgerät oder einer durch das Haushaltsgerät ausgeführten Funktion zugeordnet sein soll. Eine Kommunikation zwischen vorbestimmten Kommunikationspartnern seitens des Haushaltsgeräts und des Mobilgeräts kann so leichter etabliert werden. Eine Funktion, die einem Haushaltsgerät zugeordnet ist, kann beispielsweise automatisch auf dem Mobilgerät gestartet werden, wenn das Haushaltsgerät in eine vorbestimmte Entfernung gerät.

Die Richtlinie kann ferner steuern, mit welchem Haushaltsgerät sich das Mobilgerät koppelt. Insbesondere kann die Richtlinie steuern, dass sich das Mobilgerät nur mit einem vorbestimmten von mehreren Haushaltsgeräten koppelt. Beispielsweise kann eine Kopplung nur jeweils mit einem nächst gelegenen Haushaltsgerät erfolgen, also einem Haushaltsgerät, das die kleinste Entfernung zum Mobilgerät aufweist. Diese Bestimmung kann auf einer vorbestimmten Gruppe von Haushaltsgeräten erfolgen, die beispielsweise einem vorbestimmten Haushalt zugeordnet sind.

Das Mobilgerät kann dazu eingerichtet sein, die Richtlinie von einer zentralen Stelle zu beziehen. Dabei kann Gebrauch von einer drahtgebundenen oder drahtlosen Kommunikationseinrichtung gemacht werden. Die zentrale Stelle kann Aspekte von Haushaltsgeräten steuern oder verwalten, die einem Benutzer oder einem Haushalt zugeordnet sind.

Das Mobilgerät kann dazu eingerichtet, drahtlose Signale vom Haushaltsgerät zu empfangen, einen Hinweis auf seine Entfernung zum Haushaltsgerät auf der Basis von empfangenen Signalen zu bestimmen; und die Entfernung an das Haushaltsgerät zu übertragen. Durch das Bestimmen der Entfernung seitens des Mobilgeräts kann eine dort verfügbare Technologie leicht mit benutzt werden. Das Haushaltsgerät beziehungsweise die Steuervorrichtung kann insbesondere als Beacon ausgeführt werden, zu dem das Mobilgerät seine Entfernung leicht bestimmen kann.

Nach wieder einem weiteren Aspekt der vorliegenden Erfindung umfasst ein System ein hierin beschriebenes Haushaltsgerät ein hierin beschriebenes Mobilgerät. Ist das Mobilgerät dazu eingerichtet, eine Richtlinie anzuwenden, so kann das System ferner eine zentrale Stelle zur Bereitstellung einer Richtlinie für das Mobilgerät umfassen.

Es ist bevorzugt, dass das Mobilgerät dazu eingerichtet ist, seine Position auf der Basis der empfangenen drahtlosen Signale zu bestimmen und an das Haushaltsgerät zu übermitteln; und das Haushaltsgerät dazu eingerichtet ist, die Entfernung auf der Basis seiner Position und der Position des Mobilgeräts zu bestimmen. Das Mobilgerät kann seine Position auf der Basis eines oder mehrerer Sensoren bestimmen, beispielsweise mittels eines satellitengestützten Radionavigationssystems oder einer Inertialplattform. Die Position kann alternativ oder zusätzlich durch die Bestimmung eines Abstands zu einem oder mehreren Beacons erfolgen, von denen eines das Haushaltsgerät umfassen kann.

Nach noch einem weiteren Aspekt der vorliegenden Erfindung umfasst ein sechstes Verfahren Schritte des Bestimmens einer Entfernung zwischen einem Haushaltsgerät und einem Mobilgerät; des drahtlosen Koppelns des Haushaltsgeräts mit dem Mobilgerät; das Übermitteln einer Ausgabe des Mobilgeräts an das Haushaltsgerät; und das Bereitstellen der Ausgabe am Haushaltsgerät in Abhängigkeit der bestimmten Entfernung.

Die Entfernung kann auf der Basis eines zwischen dem Haushaltsgerät und dem Mobilgerät übermittelten drahtlosen Kommunikationssignals bestimmt werden. Das Kommunikationssignal kann insbesondere WLAN oder Bluetooth (BT oder BTLE) umfassen. Eine mittels des Kommunikationssignals übertragene Information kann die Bestimmung des Abstands unterstützen.

Hierin beschriebene Verfahren können allgemein miteinander kombiniert oder integriert werden. Dabei kann ein Teil eines Verfahrens mit einem Teil eines anderen Verfahrens zu einem Verfahren verschmolzen werden. Auch eine Kombination mehrerer Verfahren, ganz oder in Teilen, ist möglich. Ein erfindungsgemäßes Verfahren kann in Form eines Computerprogrammprodukts mit Programmcodemitteln vorliegen und mittels einer Verarbeitungseinrichtung ausgeführt werden, die insbesondere einen programmierbaren Mikrocomputer oder Mikrocontroller umfasst oder als solcher ausgebildet ist. Die Verarbeitungseinrichtung kann insbesondere von einem hierin beschriebenen Haushaltsgerät oder einem hierin beschriebenen Mobilgerät umfasst sein. In manchen Fällen ist eine verteilte Verarbeitung des Verfahrens auf verschiedenen Verarbeitungseinrichtungen möglich, die in verschiedenen Geräten angeordnet sein können, insbesondere in einem Haushaltsgerät und einem Mobilgerät.

Hierin beschriebene Haushaltsgeräte oder Systeme können ebenfalls miteinander kombiniert oder integriert werden. Hierin beschriebene Verfahren, Vorrichtungen, Haushaltsgeräte, Mobilgeräte oder Systeme können die vorliegende Erfindung auf verschiedene Weisen oder in verschiedenen Aspekten realisieren. Vorteile oder Merkmale können zwischen den Gegenständen übertragen oder miteinander kombiniert werden.

Die Erfindung wurde mit Bezug auf mehrere Anspruchskategorien erläutert (Verfahren, Vorrichtung, Haushaltsgerät, Mobilgerät, System, Computerprogrammprodukt etc.). Sofern nichts anderes angegeben ist, können sämtliche Merkmale einer Anspruchskategorie analog auf alle anderen Anspruchskategorien angewendet werden. Insbesondere besitzen die Vorrichtungen entsprechende Mittel, um die beschriebenen Verfahrensschritte auszuführen. Auch innerhalb einer Anspruchskategorie sind die Merkmale frei miteinander kombinierbar, um weitere hier nicht explizit beschriebene Ausführungsformen bereitzustellen.

Vorteilhafte Ausführungsformen der Erfindung werden nun unter Bezug auf die beiliegenden Figuren genauer beschrieben, in denen:
- Figur 1: ein System mit einem Haushaltsgerät und einem Mobilgerät;
- Figur 2: eine beispielhafte Darstellung einer Ausgabe an einem Haushaltsgerät;
- Figur 3: eine beispielhafte Kommunikation zwischen einem Mobilgerät und einem Haushaltsgerät;
- Figur 4: ein erstes Verfahren zum Steuern eines Haushaltsgeräts;
- Figur 5: ein zweites Verfahren zum Steuern eines Haushaltsgeräts;
- Figur 6: ein drittes Verfahren zum Steuern eines Haushaltsgeräts;
- Figur 7: ein viertes Verfahren zum Steuern eines Haushaltsgeräts;
- Figur 8: ein fünftes Verfahren zum Steuern eines Haushaltsgeräts; und
- Figur 9: ein sechstes Verfahren zum Steuern eines Haushaltsgeräts darstellt.

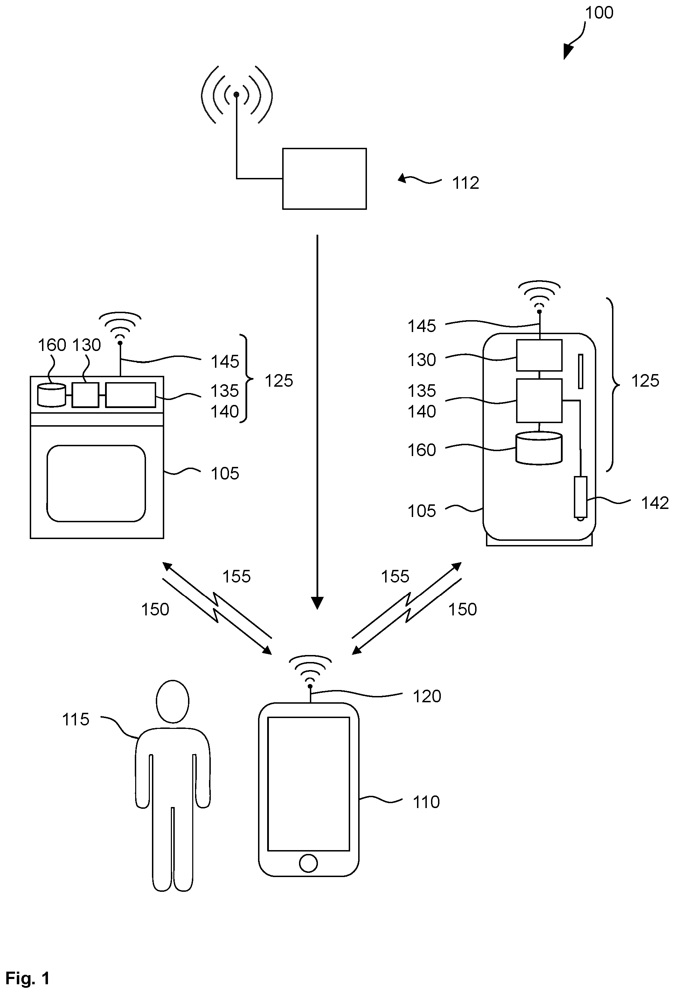

Figur 1 zeigt ein System 100 mit wenigstens einem Haushaltsgerät 105, einem Mobilgerät 110 und einer optionalen zentralen Stelle 112. Ein erstes beispielhaftes Haushaltsgerät 105 ist beispielhaft als Ofen dargestellt, ein zweites als Kühlgerät; es können jedoch auch andere Geräte verwendet werden, beispielsweise ein Herd, eine Dunstabzugshaube oder ein Rührgerät. Das Haushaltsgerät 105 kann insbesondere ein Küchengerät umfassen, das zum Betrieb in einer Küche eines Haushalts eingerichtet ist. Die Haushaltsgeräte 105 befinden sich bevorzugt nahe beieinander, beispielsweise im gemeinsamen Haushalt oder einem gemeinsamen Zimmer wie einer Küche.

Das Mobilgerät 110 umfasst bevorzugt ein Smartphone, einen Tabletcomputer oder eine Fitnessuhr und ist üblicherweise einem vorbestimmten Benutzer 115 zugeordnet, der das Mobilgerät 110 bei sich tragen kann. Das Mobilgerät kann auch einen Smart Speaker, z.B. ein Gerät der Art von Amazon Echo Dot oder Show umfassen. Auf dem Mobilgerät 110 kann eine vorbestimmte Funktion bereitgestellt werden, die insbesondere durch ein zugeordnetes Programm oder eine Applikation erbracht werden kann. Beispielhafte Funktionen umfassen die Verwaltung einer Sammlung von Kochrezepten, eine akustische oder textuelle Kommunikation mit einem anderen, entfernten Benutzer oder eine Ausgabe von Musik. Dazu kann die Funktion mittels einer lokalen Ausgabevorrichtung am Mobilgerät 110 eine Ausgabe an den Benutzer 115 bereitstellen, insbesondere in optischer, akustischer oder haptischer Form. Ferner kann die Funktion eine Eingabe des Benutzers 115 an einer lokalen Eingabevorrichtung des Mobilgeräts 110 auswerten, die dieser beispielsweise manuell bereitstellt. Dazu können entsprechende Ein- und/oder Ausgabevorrichtungen am Mobilgerät 110 vorgesehen sein. Das Mobilgerät 110 kann auch zur Auswertung weiterer Eingaben oder Umgebungsparameter eingerichtet sein, die mittelbar durch den Benutzer 115 gesteuert werden können, etwa eine Position, eine Beschleunigung oder eine Umgebungshelligkeit.

Das Mobilgerät 110 ist üblicherweise dazu eingerichtet, mit einem drahtlosen Netzwerk verbunden zu werden, insbesondere einem Weitverkehrsnetz wie dem Internet. Über diese Verbindung kann das Mobilgerät 110 auch mit der zentralen Stelle 112 kommunizieren. Dazu kann das Mobilgerät 110 etwa WLAN oder Mobilfunk, z.B. 4G oder 5G, verwenden. Ferner umfasst das Mobilgerät 110 bevorzugt eine drahtlose Kommunikationseinrichtung 120, die dazu eingerichtet ist, eine drahtlose Datenverbindung mit einem lokalen Gerät aufzubauen, beispielsweise mit dem Haushaltsgerät 105.

Das Haushaltsgerät 105 umfasst eine Steuervorrichtung 125, die bevorzugt zur Steuerung einer Funktion des Haushaltsgeräts 105 eingerichtet ist. In einer Ausführungsform ist die Steuervorrichtung 125 dazu eingerichtet, mehrere Haushaltsgeräte 105 zu steuern. Eine Steuervorrichtung 125 kann auch eigenständig und nicht als Teil eines Haushaltsgeräts 105 ausgeführt sein. Eine Kommunikation zwischen der Steuervorrichtung 125 und einem zugeordneten Haushaltsgerät 105 erfolgt in diesem Fall bevorzugt drahtlos, beispielsweise mittels einer Technik, die als Home Connect bekannt ist. In einem Haushalt können auch mehrere Steuervorrichtungen 125 vorgesehen sein, die jeweils zur Steuerung wenigstens eines Haushaltsgeräts 105 eingerichtet sind. Dabei können die Steuervorrichtungen 125 ebenfalls miteinander datentechnisch verbunden sein.

Die Steuervorrichtung 125 umfasst eine Verarbeitungseinrichtung 130, eine Eingabevorrichtung 135, eine Ausgabevorrichtung 140 und eine drahtlose Kommunikationseinrichtung 145. Die Eingabevorrichtung 135 und die Ausgabevorrichtung 140 sind vorliegend beispielhaft als berührungsempfindlicher Bildschirm miteinander integriert ausgeführt. Eine Eingabe des Benutzers 115 kann durch Berühren eines Bereichs der Eingabevorrichtung 135 bereitgestellt werden, wobei in dem Bereich auf der Ausgabevorrichtung 140 ein optischer Hinweis auf die Eingabe dargestellt werden kann. So können kontextsensitiv unterschiedliche Eingaben ermöglicht werden.

In einer weiteren Ausführungsform umfasst Steuervorrichtung 125 einen Sensor 142, der üblicherweise zur Abtastung des Haushaltsgeräts 105 oder dessen Umfeld eingerichtet ist. Beispielhafte Sensoren 135 umfassen einen Temperatursensor, einen Feuchtigkeitssensor, einen Schalter, einen Strom- oder Spannungssensor, einen Helligkeitssensor, eine Kamera oder einen Strichcodeleser. Ein mittels des Sensors 142 erfasster Sensorwert kann zur Steuerung des Haushaltsgeräts 105 verwendet werden. Beispielsweise kann der Sensorwert einen Betriebszustand, einen internen Zustand, einen internen oder externen Parameter oder einen Eingabewert für das Haushaltsgerät 105 umfassen. Der Sensor 142 kann als Sensormodul ausgeführt sein, das eine Steuerung eines Abtastvorgangs erlauben kann. Beispielsweise können eine Messhäufigkeit oder eine Messgenauigkeit einstellbar sein, oder eine Messung kann unter einer vorbestimmten, am Sensormodul bestimmten Bedingung erfolgen. Das Sensormodul kann einen abgetasteten Wert unverarbeitet ("roh") oder verarbeitet ("gekocht") bereitstellen. Eine entsprechende Verarbeitung kann beispielsweise eine Mittelwertbildung über die Zeit, eine Linearisierung einer Kennlinie oder eine Abbildung mehrerer Parameter auf einen umfassen.

Es wird vorgeschlagen, eine drahtlose Kopplung des Mobilgeräts 110 mit dem Haushaltsgerät 105 durchzuführen. Dann kann eine Eingabe des Benutzers 115 auf der Eingabevorrichtung 135 des Haushaltsgeräts 105 an das Mobilgerät 110 übermittelt und dort zur Steuerung der Funktion verwendet werden. In entsprechender Weise kann eine Ausgabe einer auf dem Mobilgerät 110 ablaufenden Funktion an das Haushaltsgerät 105 übermittelt und dort mittels der Ausgabevorrichtung 140 an den Benutzer 115 bereitgestellt werden. Die Eingabevorrichtung 135 oder der Sensor 142 beziehungsweise ein entsprechendes Sensormodul kann als lokale Eingabeeinrichtung für das Mobilgerät 110 bereitgestellt werden. Die Ausgabevorrichtung 140 kann als lokale Ausgabevorrichtung für das Mobilgerät 110 bereitgestellt werden. Mehrere einfache oder kombinierte Einrichtungen 135, 140, 142 des Haushaltsgeräts 105 können auch als kombiniertes Ein-/Ausgabegerät am Mobilgerät 110 bereitgestellt werden.

In einer Ausführungsform können Eingaben und Ausgaben über eine einzige Datenverbindung übermittelt werden. In einer anderen Ausführungsform können eine erste Datenverbindung 150 zur Übermittlung der Eingabe und eine zweite Datenverbindung 155 zur Übermittlung der Ausgabe eingerichtet werden. Dabei können die Datenverbindungen 150, 155 voneinander unabhängig sein und unterschiedliche Protokolle oder Technologien verwenden, oder als nur eine bidirektionale Verbindung ausgeführt sein.

Über die erste Datenverbindung 150 kann sich die Steuervorrichtung 125 als Benutzerschnittstelle (user interface, UI) darstellen, die dazu eingerichtet ist, Eingaben des Benutzers 115 zu erfassen und bereitzustellen. Als zugrunde liegendes Protokoll für die Datenverbindung 150 können beispielsweise WLAN oder Bluetooth verwendet werden.

Über die zweite Datenverbindung 155 kann sich die Steuervorrichtung 125 gegenüber dem Mobilgerät 110 als UI Streaming Server darstellen, also als Gerät, das einen Strom von Ausgabedaten akzeptiert, die an einen Benutzer 115 gerichtet sein können. Als zugrunde liegendes Protokoll können beispielsweise Miracast oder AirPlay verwendet werden, die ihrerseits auf WLAN oder Bluetooth aufbauen können.

Eine Entfernung zwischen dem Haushaltsgerät 105 und dem Mobilgerät 110 kann auf der Basis einer der Datenverbindungen 150, 155 bestimmt werden. Insbesondere kann die Kommunikationseinrichtung 145 dazu eingerichtet sein, die Entfernung und optional auch eine Richtung des Mobilgeräts 110 auf der Basis von Übertragungsparametern abzuschätzen. Insbesondere können eine Signalstärke, ein Signal-Rausch-Verhältnis oder eine Fehlerrate zur Entfernungsbestimmung verwendet werden. Sind mehrere Antennen verfügbar, können zueinander korrespondierende Parameter zur Entfernungsbestimmung in einen Kontext gesetzt werden. Die Entfernung kann seitens der Steuervorrichtung 120 oder seitens des Mobilgeräts 110 bestimmt werden. Eine seitens des Mobilgeräts 110 bestimmte Entfernung kann an das Haushaltsgerät 105 übermittelt werden.

Das Mobilgerät 110 kann auch seine geographische Position bestimmen, beispielsweise auf der Basis von Bestimmungen eines Empfängers eines satellitengestützten Navigationssystems, eines Inertialsystems und/oder einer Entfernung zu einem der Haushaltsgeräte 105. Dazu kann ein Haushaltsgerät 105 ein Beacon implementieren, das seine eigene Position mittels drahtloser Signale bereitstellt. Diese Technik kann insbesondere auf der Basis von Bluetooth Low Energy (BTLE) leicht genutzt werden. Die Position des Mobilgeräts 110 kann dann auf der Basis der übermittelten Position und einer Entfernung zum Haushaltsgerät 105 bestimmt werden, die auf der Basis von Übertragungsparametern des drahtlosen Signals bestimmt werden kann. Die bestimmte Position des Mobilgeräts 110 kann an das Haushaltsgerät 115 übermittelt werden, das dann auf der Basis seiner eigenen Position die Entfernung zum Mobilgerät 110 bestimmen kann.

Bevorzugt ist die Verarbeitungseinrichtung 130 dazu eingerichtet, Eigenschaften der Ausgabevorrichtung 140 und Anforderungen einer empfangenen Ausgabe des Mobilgeräts 110 aneinander anzupassen. Beispielsweise können eine Orientierung (Hochformat oder Querformat), eine Farbfähigkeit, eine grafische Auflösung oder eine Größe eines verfügbaren Anzeigebereichs der Ausgabevorrichtung 140 als Eigenschaft an das Mobilgerät 110 bereitgestellt werden. Sollte das Mobilgerät 110 eine Ausgabe bereitstellen, die diesen Vorgaben nicht folgt, so kann die Verarbeitungseinrichtung 130 eine entsprechende Umformung der Ausgabe vornehmen. Dabei können beispielsweise Darstellungsgrö-ßen oder Auflösungen ineinander umgerechnet werden oder eine Farbpalette kann reduziert oder anders belegt werden.

In manchen Ausführungsformen kann ein Anzeigebereich auf der Ausgabevorrichtung 140 für eine Funktion des Mobilgeräts 110 dynamisch zur Verfügung gestellt sein. In diesem Fall kann die Umrechnung transparent erfolgen oder geänderte Eigenschaften der Ausgabevorrichtung 140 können an das Mobilgerät 110 gemeldet werden.

In einer Ausführungsform ist eine Speichereinrichtung 160 vorgesehen, die mit der Verarbeitungseinrichtung 130 der Steuervorrichtung 125 verbunden ist. Die Speichereinrichtung 160 ist bevorzugt dazu eingerichtet, als Zwischenspeicher (Cache) zu arbeiten und eine Information vorübergehend aufzunehmen, die aufgrund einer Störung in der Datenverbindung 150 nicht an das Mobilgerät 110 übermittelt werden kann. Insbesondere kann bei Bedarf eine an der Eingabevorrichtung 135 erfasste Eingabe zwischengespeichert werden, bis die Datenverbindung 150 wieder hergestellt ist. Eine korrespondierende Speichereinrichtung kann seitens des Mobilgeräts 110 vorgesehen sein, um eine Ausgabe, die aufgrund einer unterbrochenen Datenverbindung 155 vorübergehend nicht an das Haushaltsgerät 105 übermittelt werden kann, zwischenzuspeichern. Ein entsprechender Zwischenspeicher kann seitens des Mobilgeräts 110 vorgesehen sein, um eine möglicherweise nicht zustellbare Ausgabe zu speichern, bis die Datenverbindung 155 wieder hergestellt ist.

Es ist bevorzugt, dass das Haushaltsgerät 105 eine erste Software-Komponente und das Mobilgerät 110 eine zweite Software-Komponente umfasst, die Eingaben und/oder Ausgaben untereinander austauschen. Dabei können die Komponenten jeweils auf eine zugrunde liegende Funktionalität des Haushaltsgeräts 105 beziehungsweise des Mobilgeräts 110 aufbauen, die eine Übermittlung über die Datenverbindungen 150, 155 bereitstellen. Sollte eine der Datenverbindungen 150, 155 vorübergehend getrennt werden, beispielsweise weil sich die Geräte 105, 110 außerhalb einer maximal überbrückbaren Reichweite befinden, weil Antennen ungünstig zueinander ausgerichtet sind oder weil sich ein Objekt, etwa eine Person 115, in einer Fresnelzone der Antennen befindet, so können zu übermittelnde Informationen seitens des Haushaltsgeräts 105 in der Speichereinrichtung 160 und/oder seitens des Mobilgeräts 110 in einer korrespondierenden Speichereinrichtung abgespeichert werden. Sollte die Datenverbindung 150, 155 innerhalb einer vorbestimmten Zeit, beispielsweise ca. 10, ca. 5 oder ca. 2 Sekunden, wieder verfügbar werden, so können die abgespeicherten Inhalte übermittelt und die Speichereinrichtungen ausgeleert werden. Die Software-Komponenten müssen von der unterbrochenen oder gestörten Datenverbindung 150, 155 nicht benachrichtigt werden. So kann beispielsweise eine kontinuierliche Ausgabe von akustischen Informationen, die seitens des Mobilgeräts bereitgestellt werden, seitens des Haushaltsgeräts 105 sichergestellt werden. Sollte eine Datenverbindung 150, 155 länger als die vorbestimmte Zeit unterbrochen oder gestört sein, so können beide Datenverbindungen 150, 155 oder nur die betroffene Datenverbindung 150, 155 abgebaut werden. Ein erneutes Aufbauen einer Datenverbindung 150, 155 kann eine neue Authentifikation eines der Geräte 105, 110 erfordern.

Eine Ausgabe auf der Ausgabevorrichtung 140 des Haushaltsgeräts 105 erfolgt bevorzugt in Abhängigkeit einer bestimmten Entfernung zum Mobilgerät. Beispielsweise kann ein akustischer Datenstrom mit erhöhter Lautstärke ausgegeben werden, wenn sich der Benutzer 115 mit dem Mobilgerät 110 vom ausgebenden Haushaltsgerät 105 entfernt. Eine optische Darstellung kann mit steigender Entfernung vergrößert erfolgen.

Die zentrale Stelle 112 ist vorzugsweise dazu eingerichtet, eine Richtlinie an ein Haushaltsgerät 105 bereitzustellen, die zwei Funktionen steuern kann. Eine erste mögliche Funktion besteht in einer Zuordnung eines Haushaltsgeräts 105 oder einer darauf ablaufenden Funktion zu einer auf dem Mobilgerät 110 ablaufenden Funktion. Anders ausgedrückt kann auf dem Mobilgerät 110 eine zugeordnete Applikation ("App") gestartet werden, sobald eine Kommunikation mit einem vorbestimmten Haushaltsgerät 105 erfolgt ist. Welche Applikation das ist, kann auf der Basis der Richtlinie sowie gegebenenfalls einer Randbedingung bestimmt werden. Die Randbedingung kann beispielsweise einen Funktionszustand oder eine Fähigkeit des Haushaltsgeräts 105 betreffen. Auch eine persönliche Vorliebe des Benutzers 115 des Mobilgeräts 110 kann berücksichtigt werden. Die Richtlinie kann bei Bedarf von der zentralen Stelle 112 aktualisiert werden, beispielsweise weil ein neues Haushaltsgerät 105 im gleichen Haushalt hinzugefügt wurde, weil ein neuer Benutzer 115 dem Haushalt angehört oder weil die Steuervorrichtung 125 aktualisiert wurde. Die Steuervorrichtung 125 kann beispielsweise ausgetauscht oder per Software-Update aktualisiert werden.

Eine zweite mögliche Funktion der Richtlinie besteht in einer Auswahl, mit welcher von mehreren Haushaltsgeräten 105 sich das Mobilgerät 110 koppelt. Beispielsweise kann so vorgegeben werden, dass eine erste Applikation nur mit demjenigen Haushaltsgerät 105 kommuniziert, das die geringste Entfernung zum Mobilgerät 110 aufweist. Eine zweite Applikation kann auf eine Kommunikation mit Haushaltsgeräten 110 beschränkt sein, die eine akustische Ausgabevorrichtung 140 umfassen. Andere Vorgaben oder Kombinationen sind ebenfalls möglich.

Die Richtlinie kann auch bestimmen, welche Ausgabe Vorrang vor welcher anderen Ausgabe hat. Sind beispielsweise mehrere Funktionen in einem gekoppelten Mobilgerät 110 aktiv, so kann vorbestimmt sein, welche Ausgabe Vorrang vor welcher anderen hat. Auch einzelne Nachrichten oder Informationen können unterschiedlich priorisiert sein. Beispielsweise kann eine Benachrichtigung über das Ende einer Garzeit Vorrang gegenüber einer Ausgabe eines Videodatenstroms haben. Eine solche Unterscheidung kann auch erfolgen, wenn mehrere Mobilgeräte 110 mit einem Haushaltsgerät 105 gekoppelt sind oder kommunizieren können. In einer Fortführung können auch Prioritäten zwischen einzelnen Mobilgeräten 110 oder ihnen jeweils zugeordneten Benutzern 115 berücksichtigt werden.

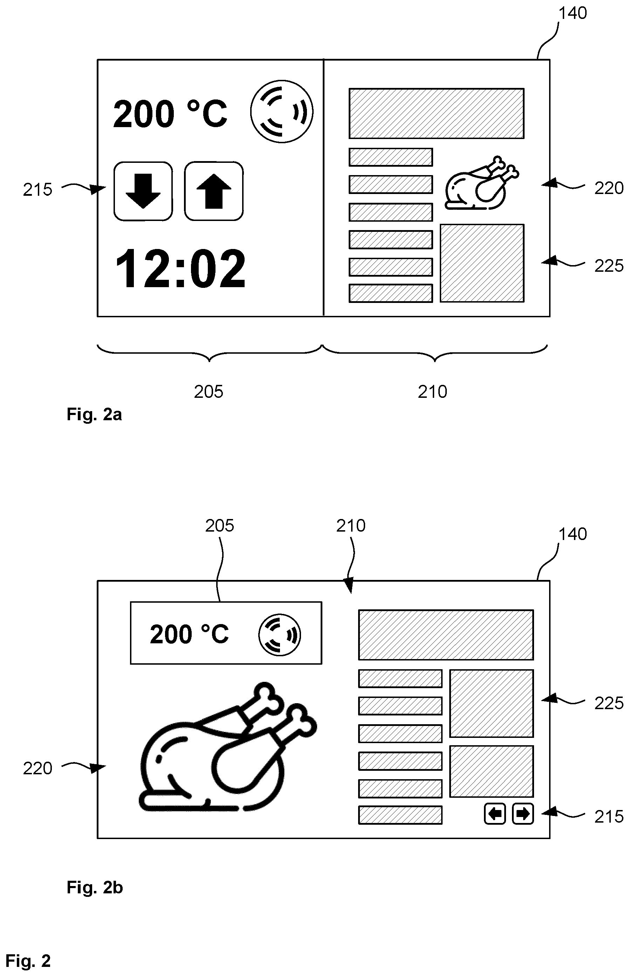

Figur 2 zeigt eine beispielhafte Darstellung einer Ausgabe an einer Ausgabevorrichtung 140 einer Steuervorrichtung 125 für ein Haushaltsgerät 105. Dabei sind jeweils ein erster Anzeigebereich 205 und ein zweiter Anzeigebereich 210 dargestellt, wobei der erste Anzeigebereich 205 einer Steuerung des Haushaltsgeräts 105 und der zweite Anzeigebereich 210 der Steuerung einer exemplarischen Funktion eines gekoppelten Mobilgeräts 110 zugeordnet ist. Die Funktion ist rein beispielhaft als Darstellung eines Kochrezepts angenommen. Als Haushaltsgerät 105 ist ebenfalls exemplarisch ein Ofen angenommen. In weiteren Ausführungsformen können mehr als zwei Anzeigebereiche 205, 210 unterstützt sein.

Figur 2a zeigt eine erste Ausführungsform, bei welcher die Anzeigebereiche 205 und 210 auf der Ausgabevorrichtung 140 nebeneinander angeordnet sind. Im ersten Anzeigebereich 205 sind beispielhaft eine Temperatur (200 °C), ein Symbol für eine Betriebsart (Umluft) und eine aktuelle Uhrzeit (12:02 Uhr) angezeigt. Außerdem sind Bedienelemente 215 dargestellt, mit denen im vorliegenden Zustand die Temperatur nach oben oder unten verstellt werden kann. Im zweiten Anzeigebereich 210 sind eine grafische Darstellung 220 einer mittels des Kochrezepts zuzubereitenden Speise und mehrere Textbereiche 225 dargestellt, die eine Anleitung oder eine Zutatenliste umfassen können.

Figur 2b zeigt eine zweite Ausführungsform, bei welcher der zweite Anzeigebereich 210 zunächst die gesamte Fläche der Ausgabevorrichtung 140 einnimmt, jedoch partiell vom ersten Anzeigebereich 205 überlagert ist. Dadurch ergeben sich andere Platzverhältnisse, die dynamisch ausgenutzt werden können. Vorliegend sind die Ausgaben der Funktion gegenüber der Ausführungsform von Figur 2a vergrößert und anders angeordnet. Zusätzlicher Raum kann durch weitere Textbereiche 225 oder ein zusätzliches Bedienelement 215 für die Funktion genutzt werden, beispielsweise zum Blättern nach rechts oder links. Ausgaben der Steuerung des Haushaltsgeräts 105 sind gegenüber der Ausführungsform von Figur 2a reduziert und verkleinert. Die Bedienelemente 215 und die Uhrzeit sind hier nicht mehr verfügbar und die Temperatur und die Betriebsart sind kleiner dargestellt.

In einer weiteren Ausführungsform können mehreren Mobilgeräten 110 - oder ihnen jeweils zugeordneten Benutzern 115 - jeweils ein Anzeigebereich 205, 210 zugeordnet sein. In einer Ausführungsform können Anzeigebereiche 205, 210 nach Art von Karteikarten-Reitern dargestellt werden. Dabei kann zu einem Zeitpunkt nur einer der Anzeigebereiche 205, 210 dargestellt werden, und die Existenz weiterer Anzeigebereiche 205, 210 kann an dargestellten Karteikarten-Reitern erkennbar sein. Zur Darstellung eines der weiteren Anzeigebereiche 205, 210 kann der entsprechende Karteikarten-Reiter selektiert werden, sodass der ihm zugeordnete Inhalt auf der Ausgabevorrichtung 140 dargestellt wird.

Unter welchen Umständen eine Ausgabe einer Funktion auf einem Anzeigebereich 205, 210 auf der Ausgabevorrichtung 140 erfolgt, wie groß oder positioniert ein Anzeigebereich 205, 210 ist, oder wie mehrere Anzeigebereiche 205, 210 auf der Ausgabevorrichtung 140 angeordnet sind, kann mittels Regeln bestimmt werden, die auch Policies genannt werden können.

Beispielsweise können Prioritäten unter Benutzern 115, Funktionen, Mobilgeräten 110 oder Anzeigebereichen 205, 210 gebildet sein. Die genannten Parameter können auf der Basis von Regeln ebenfalls mit Prioritäten versehen sein, sodass beispielsweise bestimmt werden kann, ob eine erste Funktion, deren Priorität höher als die einer zweiten Funktion ist, deren zugeordnetes Mobilgerät 110 aber eine geringere Priorität als das der zweiten Funktion zugeordnetes Mobilgerät 110, im Ergebnis vor der zweiten Funktion auf die Ausgabevorrichtung 140 zugreifen darf oder nicht. Prioritäten können auch ereignisbasiert bestimmt oder verändert werden. Beispielsweise kann die Priorität einer Funktion, deren Ausgabe sich verändert, höher sein als die einer Funktion, deren Ausgabe sich nicht ändert. Die Priorität einer Funktion kann vorübergehend erhöht werden, wenn sich ihre Ausgabe ändert. Bevorzugt sind die Prioritäten und Regeln derart gestaltet, dass eine Steuerbarkeit des Haushaltsgeräts 105 stets gewährleistet ist und im Zweifelsfall einer Steuerbarkeit einer Funktion eines Mobilgeräts 110 vorgeht.

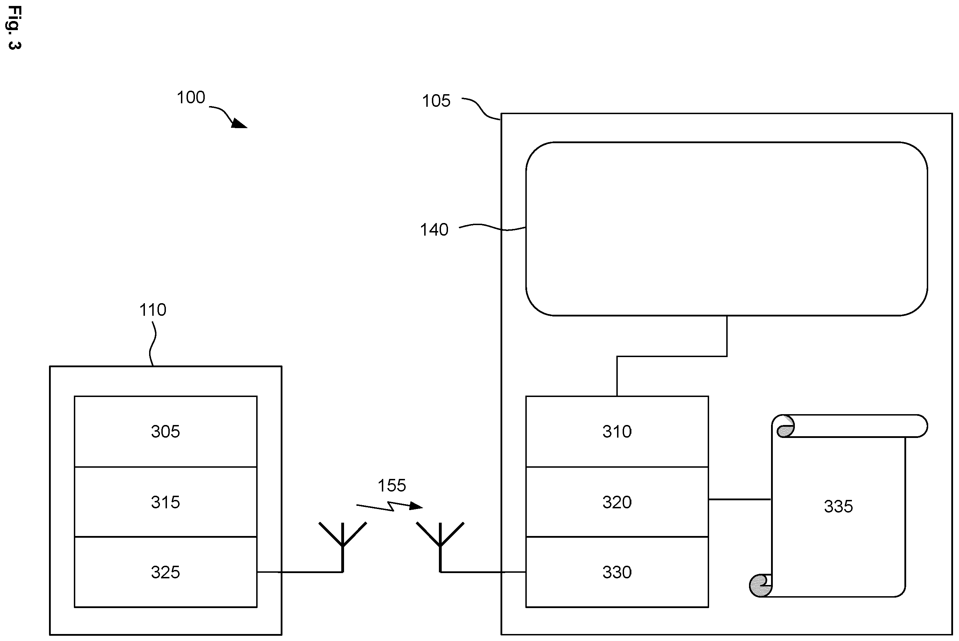

Figur 3 zeigt schematisch eine Kommunikation zwischen einem Mobilgerät 110 und einem Haushaltsgerät 105. Die dargestellte Kommunikation betrifft eine Übermittlung einer Ausgabe vom Mobilgerät 110 an das Haushaltsgerät 105. In entsprechender Weise kann jedoch auch eine Eingabe am Haushaltsgerät 105 behandelt und an das Mobilgerät 110 übermittelt werden.

Im Mobilgerät 110 ist eine erste Softwarekomponente 305 vorgesehen, die eine Ausgabe erzeugt. Die Ausgabe kann beispielsweise einen Text oder eine Grafik umfassen. Die Softwarekomponente 305 macht Gebrauch von einer schichtartigen Abstraktion der Kommunikation, wie sie beispielsweise im ISO-OSI-Modell vorgeschlagen ist. Die erste Softwarekomponente 305 stellt die Ausgabe einer zweiten Softwarekomponente 310 bereit, die seitens des Mobilgeräts 110 vorgesehen ist und die Ausgabe auf der Ausgabevorrichtung 140 darstellen kann.

Allerdings erfolgt die Übertragung der Ausgabe nicht unmittelbar zwischen den Komponenten 305 und 310, sondern die erste Softwarekomponente 305 gibt die Ausgabe an eine darunterliegende erste Übermittlungsschicht 315 weiter, welche die Ausgabe an eine zweite Übermittlungsschicht 320 seitens des Haushaltsgeräts 105 übermittelt. Die Übermittlungsschichten 315 und 320 können beispielsweise dazu eingerichtet sein, eine Flusskontrolle, eine Quittierung oder eine Neuübertragung im Fehlerfall zu steuern.

Doch auch zwischen den Übermittlungsschichten 315 und 320 erfolgt nur im abstrakten Sinn eine direkte Kommunikation. Tatsächlich gibt die erste Übermittlungsschicht 315 zu übermittelnde Daten an eine erste physische Schicht 325 weiter, welche die Daten drahtlos über die Datenverbindung 155 an eine zweite physische Schicht 330 seitens des Haushaltsgeräts 105 übermittelt. Die physischen Schichten 325 und 330 können beispielsweise eine Umwandlung von Bits in physische Signale wie Strom oder Frequenzen umwandeln.

Obwohl vorliegend beispielhaft drei Schichten 305, 315, 325 bzw. 310, 320 und 330 beschrieben sind, können auch beliebig mehr oder weniger Schichten vorgesehen sein.

Es wird vorgeschlagen, dass seitens des Haushaltsgeräts 105 ein Regelwerk 335 vorgesehen ist, das beispielsweise nach Art einer Steuerliste einer Firewall verwendet wird, um zu bestimmen, ob eine über die Datenverbindung 155 empfangene Ausgabe auf der Ausgabevorrichtung 140 ausgegeben werden soll oder nicht. Beispielhaft wird das Regelwerk 335 auf der Übermittlungsschicht 320 angewandt. Auf dieser Schicht können Metainformationen über das Mobilgerät 110, die erste Softwarekomponente 305, einen mit dem Mobilgerät 110 verbundenen Benutzer oder Übermittlungsparameter vorliegen, die bezüglich des Regelwerks 335 analysiert werden können.

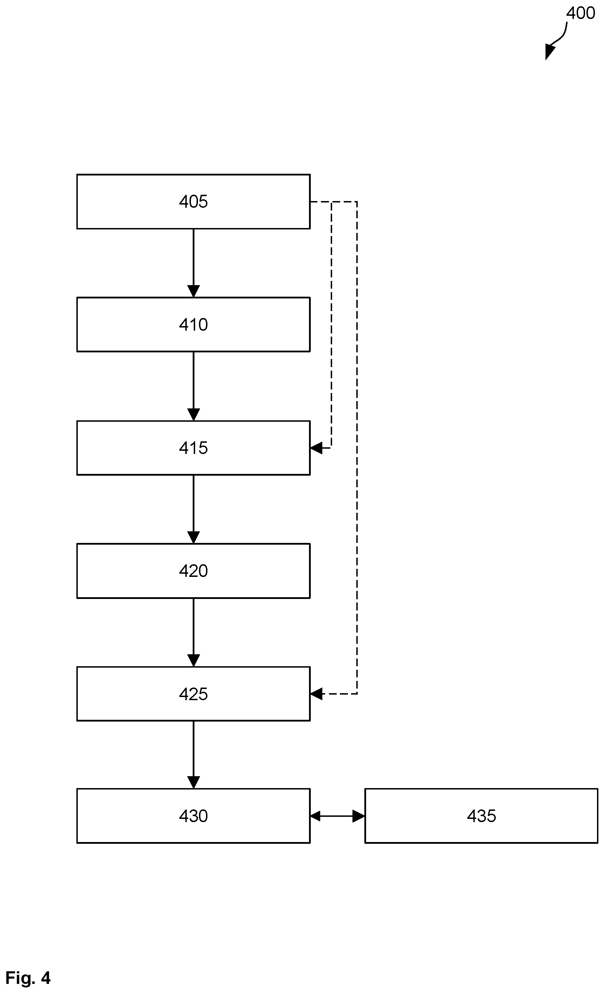

Figur 4 zeigt ein Ablaufdiagramm eines ersten Verfahrens 400 zum Steuern eines Haushaltsgeräts 105. Das Verfahren 400 kann verteilt auf dem Haushaltsgerät 105 und einem Mobilgerät 110 ausgeführt werden.

In einem Schritt 405 kann eine Richtlinie bestimmt werden, beispielsweise indem eine vorbestimmte Richtlinie bereitgestellt, eine Eingabe eines Benutzers 115 erfasst oder eine Richtlinie von einer zentralen Stelle 112 heruntergeladen wird.

In einem Schritt 410 können das Mobilgerät 110 und das Haushaltsgerät 105 miteinander kommunikativ gekoppelt werden, beispielsweise indem Datenverbindungen 150, 155 hergestellt werden. In einem Schritt 415 kann bestimmt werden, welche Sensoren 142 seitens des Haushaltsgeräts 105 zur Freigabe zur Verfügung stehen. Diese Bestimmung kann in Abhängigkeit der Richtlinie erfolgen, sodass nicht jeder Sensor 142 beliebig freigegeben werden kann.

In einem Schritt 420 kann das Mobilgerät 110 ein virtuelles Gerät bilden, das dazu eingerichtet ist, Sensorwerte eines am Haushaltsgerät 105 freigegebenen Sensors 142 bereitzustellen. Ein virtuelles Gerät kann sich für eine auf dem Mobilgerät 110 ablaufende Funktion oder App so verhalten wie ein tatsächlich real am Mobilgerät 110 lokal vorhandenes Gerät. In einem Schritt 425 kann das virtuelle Gerät einer oder mehreren Funktionen des Mobilgeräts 110 bereitgestellt werden. Dazu kann ebenfalls die Richtlinie beachtet werden, sodass nicht jede Funktion alle Zugriffsrechte oder Informationen über den Sensor 142 erhalten kann.

In einem Schritt 430 kann die Funktion ausgeführt werden. Dazu kann in einem Schritt 435 der Sensor 142 konfiguriert werden und Sensorwerte des Sensors 142 können über die Datenverbindung 150 empfangen, gegebenenfalls bezüglich der Richtlinie umgesetzt, gefiltert oder bereinigt, und der Funktion bereitgestellt werden.

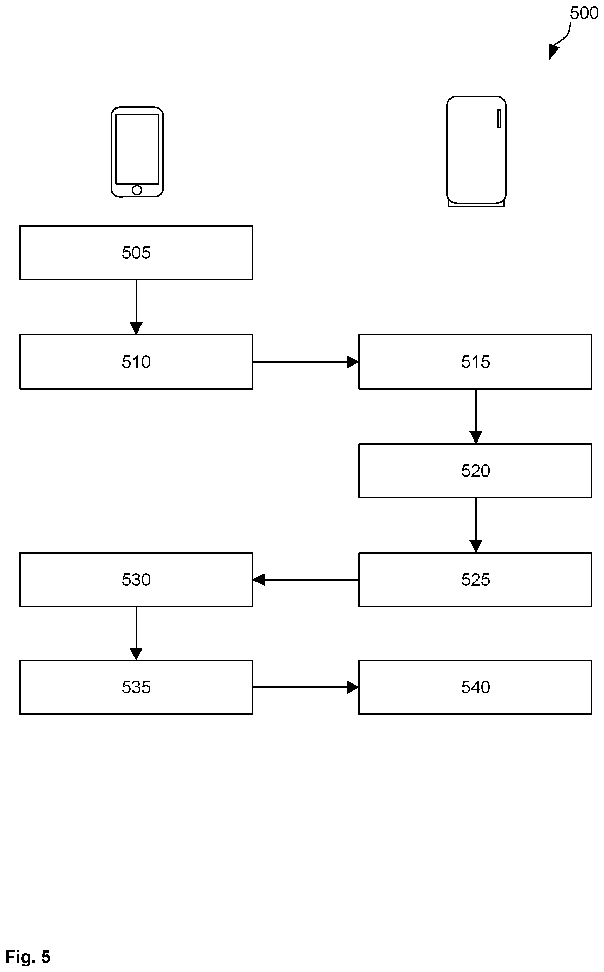

Figur 5 zeigt ein Ablaufdiagramm eines zweiten Verfahrens 500 zum Steuern eines Haushaltsgeräts 105. In der beispielhaft gewählten Ausführungsform sind Schritte, die dem Mobilgerät 110 zugeordnet sind, in einem linken Bereich, und Schritte, die einem Haushaltsgerät 105 zugeordnet sind, in einem rechten Bereich dargestellt. Es wird davon ausgegangen, dass zu Beginn des Verfahrens 500 bereits eine Datenverbindung 155 vom Mobilgerät 110 zum Haushaltsgerät 105 besteht und die beiden Geräte insbesondere miteinander gekoppelt sind. Die Kopplung kann bei Bedarf an einer beliebigen Stelle im Verfahren 500 nachgeholt werden. Das zweite Verfahren 500 kann insbesondere mit dem Verfahren 400 ganz oder teilweise kombiniert werden.

In einem Schritt 505 kann das Mobilgerät 110 eine Nachricht empfangen. In einer Ausführungsform wird nur eine Benachrichtigung auf eine an einer externen Stelle 112 bereitstehende Nachricht empfangen. In einem Schritt 510 kann ein Hinweis oder eine Benachrichtigung auf die Nachricht erzeugt und an das Haushaltsgerät 105 übermittelt. Das Haushaltsgerät 105 kann den Hinweis in einem Schritt 515 empfangen und einem Benutzer 115 bereitstellen, beispielsweise mittels der Ausgabevorrichtung 140. Optional kann die Ausgabe oder Darstellung des Hinweises seitens des Haushaltsgeräts 105 bezüglich einer vorbestimmten Richtlinie gesteuert werden, die vorbestimmt, von einer externen Stelle 112 heruntergeladen oder von einem Benutzer 115 angepasst sein kann.

In einer Fortführung des Verfahrens 500 kann in einem Schritt 520 eine Eingabe eines Benutzers 115 erfasst werden, die darauf hinweist, dass der Benutzer die Nachricht, auf die er hingewiesen wurde, am Haushaltsgerät 105 erhalten möchte. Daraufhin kann das Haushaltsgerät 105 die Nachricht in einem Schritt 525 vom Mobilgerät 110 anfordern. Das Mobilgerät 110 kann die Anforderung in einem Schritt 530 empfangen und die Nachricht in einem Schritt 535 an das Haushaltsgerät 105 übermitteln. Das Mobilgerät 110 kann die Nachricht einer Kontrolle anhand einer Richtlinie unterziehen. Eine Nachricht kann auf der Basis der Richtlinie verworfen, angepasst oder verändert werden.

In einem Schritt 540 kann die Nachricht durch das Haushaltsgerät 105 an den Benutzer 115 bereitgestellt werden, beispielsweise mittels der Ausgabevorrichtung 140. Vorher kann das Haushaltsgerät 105 die Nachricht ebenfalls einer Kontrolle bezüglich einer vorbestimmten Richtlinie unterziehen.

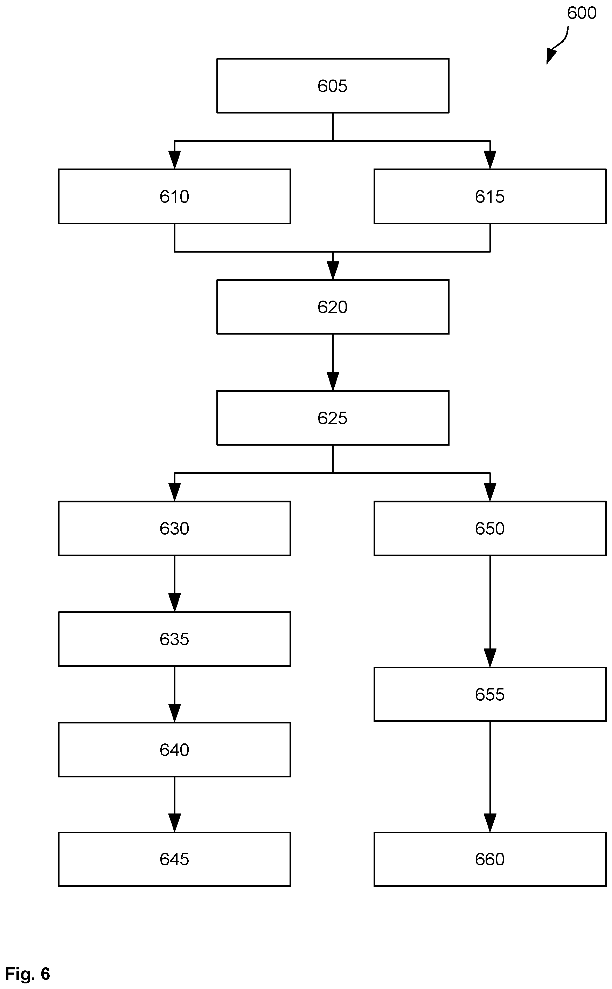

Figur 6 zeigt ein Ablaufdiagramm eines dritten Verfahrens 600 zur Steuerung eines Haushaltsgeräts 105. In einem Schritt 605 kann ein Mobilgerät 105 in einem vorbestimmten Bereich um ein Haushaltsgerät 105 erfasst werden oder umgekehrt. Der Bereich kann durch eine Reichweite einer verwendeten Kommunikationstechnologie vorgegeben sein. Dieser Schritt kann seitens des Haushaltsgeräts 105 oder des Mobilgeräts 110 durchgeführt werden.

In einem Schritt 610 kann eine Verbindung für Eingaben an eine Funktion des Mobilgeräts 110 hergestellt werden, beispielsweise indem das Haushaltsgerät 105 beziehungsweise die Steuervorrichtung 125 als Eingabegerät über eine Bluetooth-Verbindung 150 gekoppelt wird. In einem Schritt 615 kann eine Verbindung für Ausgaben der Funktion des Mobilgeräts 110 hergestellt werden, beispielsweise indem die Steuervorrichtung 125 als UI Streaming Server über eine WLAN-Verbindung 155 an das Mobilgerät 110 angekoppelt wird.

Die Datenverbindungen 150, 155 folgen bevorzugt bereits etablierten Standards zur entfernten Ausgabe beziehungsweise Eingabe. Bevorzugt wird ein offen dokumentierter Standard verwendet, der weiter bevorzugt voraussichtlich für längere Zeit nicht wesentlich verändert oder inkompatibel erweitert wird. Diese Zeit kann eine voraussichtliche Lebensdauer des Haushaltsgeräts abdecken, beispielsweise ca. 10 - 30 Jahre. Weiter bevorzugt existiert ein Test, mit dem bestimmt werden kann, dass das Haushaltsgerät 105 den gewählten Standard in einer vorbestimmten Version fehlerfrei implementiert. Die Erfüllung des Tests kann zertifiziert werden. Die drahtlosen Datenverbindungen 150, 155 können voneinander getrennt und unabhängig sein oder es kann eine Datenverbindung 150, 155 sowohl für Eingaben als auch für Ausgaben verwendet werden.

In einem Schritt 620 kann eine Entfernung zwischen dem Haushaltsgerät 105 und dem Mobilgerät 110 bestimmt werden, insbesondere auf der Basis eines Übertragungsparameters einer der Datenverbindungen 150, 155. In einem Schritt 625 kann bestimmt werden, ob eine Eingabe und/oder eine Ausgabe für die Funktion am Haushaltsgerät 105 erfolgen soll. Dazu kann beispielsweise eine Bestätigung des Benutzers abgefragt werden. Es kann bestimmt werden, ob die bestimmte Entfernung in einem vorbestimmten Bereich liegt, in dem die Umleitung erfolgen soll. Es kann auch bestimmt werden, dass eine Eingabe oder Ausgabe eines anderen Benutzers 115 gerade höhere Priorität genießt, sodass die Umleitung für den vorliegenden Benutzer 115 nicht verfügbar sein kann. Die Umleitung kann auch nicht verfügbar sein, wenn ein Gerätezustand des Haushaltsgeräts 105 eine direkte und exklusive Bedienung des Haushaltsgeräts mittels der Einrichtungen 135, 140 erfordert, beispielsweise weil eine Übertemperatur oder eine anderweitig drohende Gefahr festgestellt wurde. Soll die Umleitung erfolgen, so kann mit dem Verfahren 600 fortgefahren werden.

In einem Schritt 630 kann eine Eingabe am Haushaltsgerät 105 erfasst werden. In einem Schritt 635 kann ein der Eingabe zugeordnetes Mobilgerät 110 bestimmt werden, falls mehrere Mobilgeräte 110 mit dem Haushaltsgerät 105 gekoppelt sein können. In einem Schritt 640 kann eine dem Mobilgerät 110 zugeordnete Funktion bestimmt werden, falls mehrere Funktionen des Mobilgeräts 110 Eingaben des Haushaltsgeräts 105 akzeptieren können. In einem Schritt 645 kann die bestimmte Eingabe der Funktion bereitgestellt werden.

Nebenläufig dazu kann in einem Schritt 650 eine Ausgabe einer Funktion des Mobilgeräts 110 erfasst werden. In einem Schritt 655 kann ein Ausgabebereich der Ausgabevorrichtung 140 bestimmt werden, welcher der Funktion zugeordnet ist. Sollte der Funktion aktuell kein Ausgabebereich zugeordnet sein, können vorhandene Ausgabebereiche neu zugeordnet oder ein neuer Ausgabebereich für die Funktion gebildet werden. In einem Schritt 660 kann die Ausgabe der Funktion auf dem zugeordneten Ausgabebereich bereitgestellt werden.

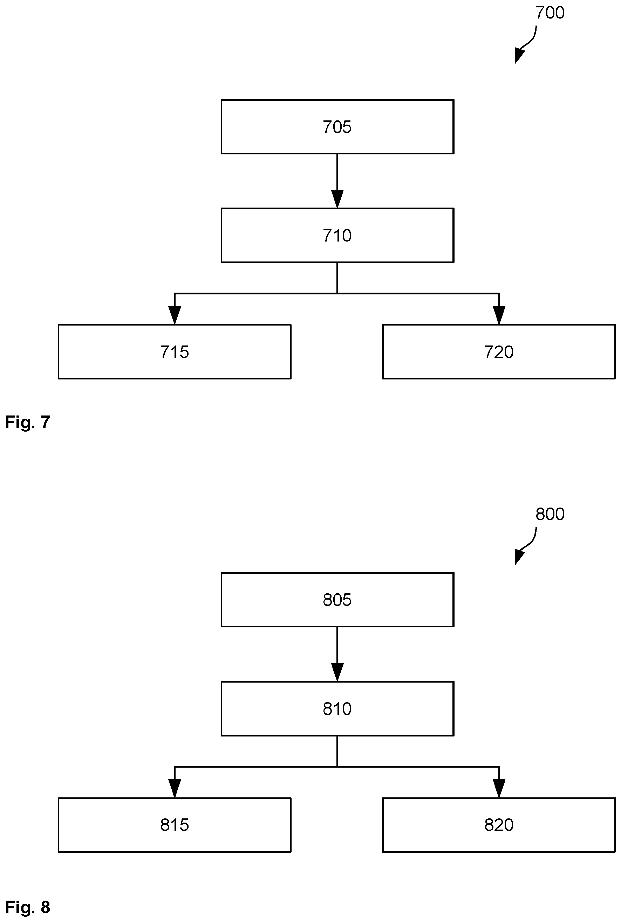

Figur 7 zeigt ein viertes Verfahren 700 zum Steuern eines Haushaltsgeräts 105. Es wird davon ausgegangen, dass das Haushaltsgerät 105 mittels einer drahtlosen Datenverbindung 155 mit dem Mobilgerät 110 gekoppelt ist.

In einem Schritt 705 kann eine Ausgabe des Mobilgeräts 110 empfangen werden. Die Ausgabe kann allgemein solche an einen Benutzer gerichtete Informationen umfassen, die seitens des Mobilgeräts 110 bereitgestellt werden können, falls keine Kopplung vorliegt. Mithilfe der Kopplung kann das Haushaltsgerät 105 bzw. eine von ihm umfasste Steuervorrichtung 125 als entfernte Ausgabevorrichtung verwendet werden.

Sollte eine Kopplung zwischen dem Haushaltsgerät 105 und dem Mobilgerät 110 noch nicht bestehen, so kann sie hergestellt werden, sodass die Datenverbindungen 150, 155 benutzt werden können. Die Kopplung kann beispielsweise wieder aufgelöst werden, wenn eine vorbestimmte Distanz zwischen dem Haushaltsgerät 105 und dem Mobilgerät 110 überschritten ist. In einer Ausführungsform erfolgt eine Kopplung nur, falls die Distanz einen zweiten Schwellenwert unterschreitet. Der zweite Schwellenwert kann kleiner als der erste sein, sodass das Auf- und Abbauen mit einer vorbestimmten Hysterese erfolgen kann. Flackerhaftes Auf- und Abbauen der Kopplung kann so verhindert werden. In einer weiteren Ausführungsform kann auch eine Hysterese für eine Übergabe einer Kopplung von einem Haushaltsgerät 105 auf ein anderes Haushaltsgerät 105 vorgesehen sein. In noch einer weiteren Ausführungsform kann ein Kontrollpunkt vorgegeben sein, den das Mobilgerät 110 passieren muss, bevor eine Kopplung mit einem Haushaltsgerät 105 durchgeführt wird. Beim Passieren eines weiteren Kontrollpunkts durch das Mobilgerät 110 kann eine bestehende Kopplung zu einem zugeordneten Haushaltsgerät 105 abgebaut werden.

In einem Schritt 710 kann das Regelwerk 335 auf die empfangene Ausgabe angewandt werden. Insbesondere kann geprüft werden, ob ein Inhalt der Ausgabe, ein Format der Ausgabe oder eine Metainformation, die beim Übermitteln der Ausgabe angefallen ist, das Bereitstellen der Ausgabe auf der Ausgabevorrichtung 140 erlaubt oder nicht.

Wird bestimmt, dass die Ausgabe nicht ausgegeben werden darf, so kann sie in einem Schritt 715 verworfen werden. Zusätzlich kann die Datenverbindung 155 abgebrochen oder abgebaut werden. Eine zur Ausgabe korrespondierende Eingabe kann ebenfalls verworfen werden.

Andernfalls, wenn im Schritt 710 bestimmt wurde, dass die Ausgabe auf der Ausgabevorrichtung 140 bereitgestellt werden darf, kann sie in einem Schritt 720 ausgegeben werden.

Figur 8 zeigt ein fünftes Verfahren 800, das ebenfalls auf einem Haushaltsgerät 105 ablaufen kann, das mit einem Mobilgerät 110 gekoppelt ist. Insbesondere kann das fünfte Verfahren 800 parallel oder nebenläufig zu einem der anderen beschriebenen Verfahren ausgeführt werden.

In einem Schritt 805 kann eine Eingabe an der Eingabevorrichtung 135 des Haushaltsgeräts 105 erfasst werden. In einem Schritt 810 kann das Regelwerk 335 auf die erfasste Eingabe angewandt werden. Dabei können insbesondere ein Inhalt und ein Kontext der Eingabe überprüft werden. Die Eingabe kann insbesondere auf ein Mobilgerät 110, eine Softwarekomponente 205 oder einen mit dem Mobilgerät 110 verbundenen Benutzer bezogen sein.

Wurde bestimmt, dass die Eingabe aufgrund eines ihrer Aspekte auf der Basis des Regelwerks 335 nicht zulässig ist, so kann sie in einem Schritt 815 verworfen werden. Außerdem kann eine korrespondierende Ausgabe, wie sie oben im Zusammenhang mit einem der anderen Verfahren beschrieben wurde, ebenfalls verworfen werden. Eine Datenverbindung 155 zum Mobilgerät 110 kann abgebaut oder abgebrochen werden. Andernfalls, wenn im Schritt 810 bestimmt wurde, dass die Eingabe zulässig ist, kann sie in einem Schritt 820 an das Mobilgerät 110 übermittelt werden.

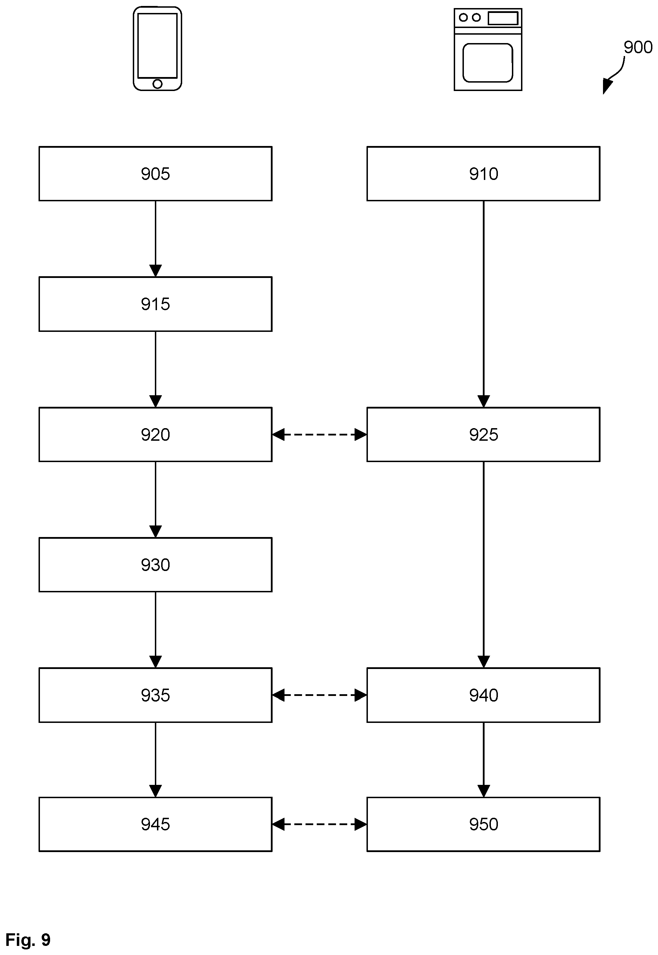

Figur 9 zeigt ein Ablaufdiagramm eines sechsten Verfahrens 900. Das Verfahren 900 kann verteilt auf verschiedenen Komponenten ausgeführt werden, insbesondere einem Haushaltsgerät 105 und einem Mobilgerät 110. Beispielhaft sind üblicherweise dem Mobilgerät 110 zugeordnete Schritte in einem linken Bereich, üblicherweise dem Haushaltsgerät 105 zugeordnete Schritte in einem rechten Bereich dargestellt.

In einem Schritt 905 kann das Haushaltsgerät 105 drahtlose Signale, insbesondere elektromagnetische Signale, aussenden, die in einem Schritt 910 vom Haushaltsgerät 910 empfangen werden können. Die Schritte können auch umgekehrt ausgeführt werden, sodass das Haushaltsgerät 105 Signale aussendet, die das Mobilgerät 110 empfängt. Das sendende Gerät 105, 110 kann die Signale nach Art eines Beacons aussenden, sodass das empfangende Gerät 105, 110 seinen Abstand zum Sender verbessert bestimmen kann. Die Bestimmung des Abstands auch auf der Basis von Parametern einer physischen Übertragung oder einer Bitübertragung zwischen dem Mobilgerät 110 und dem Haushaltsgerät 105 erfolgen.

In einem Schritt 915 kann das Mobilgerät 110 das Haushaltsgerät 105 identifizieren und anhand einer Richtlinie entscheiden, ob es mit ihm kommunizieren soll. Die Richtlinie kann vorgegeben sein oder von einer externen Stelle 112 heruntergeladen werden. Soll eine Kommunikation erfolgen, so kann anhand der Richtlinie bestimmt werden, welche Funktion oder App für die Kommunikation mit dem vorliegenden Haushaltsgerät 105 vorgesehen ist. Die bestimmte Funktion oder App kann gestartet oder von einer empfangenen Information benachrichtigt werden.

In einem Schritt 920 erfolgt seitens des Mobilgeräts 110 eine Kopplung mit dem Haushaltsgerät 105, das die Kopplung in einem korrespondierenden Schritt 925 durchführt. Das Koppeln kann einen Austausch von Übertragungsparametern, eine Authentifizierung oder eine Beglaubigung des Kommunikationspartners umfassen. Im Anschluss an eine Kopplung können Informationen bevorzugt in beiden Richtungen einfach ausgetauscht werden.

In einem Schritt 930 kann das Mobilgerät 110 seine Entfernung zum Haushaltsgerät 105 bestimmen. Diese Bestimmung kann insbesondere auf der Basis von Parametern erfolgen, die der Kommunikation zugrunde liegen, beispielsweise ein RSS oder ein SNR. In einer weiteren Ausführungsform kann das Mobilgerät 110 auch seine geografische Position bestimmen, wobei es auf Parameter der Kommunikation zurückgreifen kann oder nicht. In einem Schritt 935 können die bestimmte Entfernung und/oder die bestimmte Position an das Haushaltsgerät 105 übermittelt werden.

Das Haushaltsgerät 105 bestimmt in einem Schritt 940 seine Entfernung zum Mobilgerät 110. Dazu kann es eine zuvor empfangene, seitens des Mobilgeräts 110 bestimmte Entfernung zugrunde legen. In einer Variante kann das Haushaltsgerät 105 die Entfernung bezüglich einer eigenen Position und einer Position des Mobilgeräts 110 bestimmen, die es zuvor vom Mobilgerät 110 empfangen haben kann. Alternativ kann das Haushaltsgerät 105 die Entfernung auf der Basis von Parametern bestimmen, die der Kommunikation zugrunde liegen, wie oben beschrieben ist, beispielsweise eines RSS oder einer SNR. In einer weiteren Ausführungsform ist ein dedizierter Sensor zur Bestimmung der Entfernung vorgesehen. Mehrere Informationsquellen können zur Bestimmung des Abstands auch miteinander kombiniert werden.

In einem Schritt 945 kann das Mobilgerät 105 eine Ausgabe über die etablierte Datenverbindung 150, 155 an das Haushaltsgerät 105 übermitteln. Dieses kann die Ausgabe in einem Schritt 950 entgegennehmen und in Abhängigkeit der bestimmten Entfernung aufbereiten. Beispielsweise können die Größe, Häufigkeit, Farbgebung oder Ausrichtung einer optischen Ausgabe in Abhängigkeit der Entfernung bestimmt werden. Je größer die Entfernung ist, desto klarer oder auffälliger kann die Ausgabe gestaltet werden. Eine akustische Ausgabe kann in ihrer Lautstärke oder eines verwendeten Frequenzspektrums in Abhängigkeit der Entfernung angepasst werden. Die aufbereitete Ausgabe kann dann mittels der Ausgabevorrichtung 140 ausgegeben werden.

Die mit Bezug auf die Figuren gemachten Erläuterungen sind rein illustrativ und nicht beschränkend zu verstehen. An den in den Figuren gezeigten Ausführungsformen können viele Änderungen vorgenommen werden, ohne den Schutzumfang der hier beschriebenen Erfindung zu verlassen. Insbesondere können die Merkmale der Ausführungsformen frei miteinander kombiniert werden, um so weitere für den Anwendungszweck optimierte Ausführungsformen bereit zu stellen.

### Bezugszeichen

- 100: System
- 105: Haushaltsgerät
- 110: Mobilgerät
- 112: zentrale Stelle
- 115: Benutzer
- 120: Kommunikationseinrichtung
- 125: Steuervorrichtung
- 130: Verarbeitungseinrichtung
- 135: Eingabevorrichtung
- 140: Ausgabevorrichtung
- 142: Sensor
- 145: drahtlose Kommunikationseinrichtung
- 150: erste Datenverbindung (Eingabe)
- 155: zweite Datenverbindung (Ausgabe)
- 160: Speichervorrichtung

- 205: erster Anzeigebereich
- 210: zweiter Anzeigebereich
- 215: Bedienelement
- 220: grafische Darstellung
- 225: Textbereich

- 305: erste Softwarekomponente
- 310: zweite Softwarekomponente
- 315: erste Übermittlungsschicht
- 320: zweite Übermittlungsschicht
- 325: erste physische Schicht
- 330: zweite physische Schicht
- 335: Regelwerk

- 400: Verfahren
- 405: Richtlinie bestimmen
- 410: Koppeln Mobilgerät mit Haushaltsgerät
- 415: verfügbare Sensoren Bestimmen
- 420: virtuelles Gerät bilden
- 425: virtuelles Gerät bereitstellen
- 430: Funktion ausführen
- 435: Sensor konfigurieren, Sensorwerte bereitstellen

- 500: Verfahren
- 505: Push-Nachricht empfangen
- 510: Hinweis erzeugen, übermitteln
- 515: Hinweis empfangen, darstellen
- 520: Benutzereingabe bestimmen
- 525: Inhalt anfordern
- 530: Anforderung empfangen
- 535: Nachricht übermitteln
- 540: Inhalt bereitstellen

- 600: Verfahren
- 605: Mobilgerät erfassen
- 610: Herstellen Verbindung für Eingaben
- 615: Herstellen Verbindung für Ausgaben
- 620: Entfernung bestimmen
- 625: Eingabe /Ausgabe lokal?
- 630: Eingabe erfassen
- 635: zugeordnetes Mobilgerät bestimmen
- 640: zugeordnete Funktion bestimmen
- 645: Eingabe bereitstellen
- 650: Ausgabe erfassen
- 655: zugeordneten Ausgabebereich bestimmen
- 660: Ausgabe bereitstellen

- 700: Verfahren
- 705: Ausgabe empfangen
- 710: Regelwerk anwenden
- 715: Ausgabe verwerfen
- 720: Ausgabe ausgeben

- 800: Verfahren
- 805: Eingabe erfassen
- 810: Regelwerk anwenden
- 815: Eingabe verwerfen
- 820: Eingabe übermitteln

- 900: Verfahren
- 905: Aussenden / Empfangen drahtlose Signale
- 910: Aussenden / Empfangen drahtlose Signale
- 915: Richtlinie prüfen, App starten
- 920: Koppeln
- 925: Koppeln
- 930: Bestimmen Position / Entfernung
- 935: Übermitteln Position / Entfernung
- 940: Bestimmen Entfernung
- 945: Übermitteln Ausgabe
- 950: Bereitstellen Ausgabe

## Patentansprüche

1. Verfahren (400; 500), wobei das Verfahren (400) folgende Schritte umfasst:
- drahtloses Koppeln (410) eines Haushaltsgeräts (105) mit einem Mobilgerät (110); und
- Bereitstellen (425) eines Sensors (142) des Haushaltsgeräts (105) als lokales Gerät des Mobilgeräts (110) für eine auf dem Mobilgerät (110) ablaufende Funktion; insbesondere eine App, so dass der Sensor des Haushaltsgeräts durch die Funktion im Wesentlichen so verwendet werden kann, als wäre der Sensor vom Mobilgerät umfasst;
- wobei der Sensor einen Bereich des Haushaltsgeräts abtastet und einen Sensorwert bereitstellt, der an das Mobilgerät übermittelt und der Funktion bereitgestellt wird;
**dadurch gekennzeichnet, dass**
- die auf dem Mobilgerät (110) ablaufende Funktion eine Darstellung eines Kochrezepts umfasst und eine bereitzustellende Ausgabe vom Mobilgerät an das Haushaltsgerät übertragen wird; und
- die auf dem Mobilgerät (110) ablaufende Funktion einem Benutzer parallel zu einer Funktion des Haushaltsgeräts am Haushaltsgerät zugänglich gemacht wird.

2. Verfahren (400; 500) nach Anspruch 1, wobei der Sensor (142) in Abhängigkeit einer vorbestimmten Richtlinie bereitgestellt wird.

3. Verfahren (400; 500) nach Anspruch 2, wobei das Bereitstellen des Sensors (142) an die Funktion durch einen Benutzer (115) des Mobilgeräts (110) steuerbar ist.

4. Verfahren (400; 500) nach Anspruch 2 oder 3, wobei die Richtlinie von einer zentralen Stelle (112) bezogen wird.

5. Verfahren (400; 500) nach einem der vorangehenden Ansprüche, ferner umfassend ein Steuern (435) eines Abtastkriteriums des Sensors (142) durch die Funktion.

6. Verfahren (400; 500) nach einem der vorangehenden Ansprüche, wobei das Mobilgerät (110) eine Nachricht empfängt (505); ein Hinweis auf die empfangene Nachricht vom Mobilgerät (110) an das Haushaltsgerät (105) übermittelt (510) wird; und das Haushaltsgerät (105) den Hinweis an einen Benutzer (115) bereitstellt (515).

7. Verfahren (400; 500) nach Anspruch 6, wobei das Übermitteln (510) in Abhängigkeit einer vorbestimmten Richtlinie erfolgt.

8. Verfahren (400; 500) nach Anspruch 6 oder 7, wobei ein übermittelter Inhalt in Abhängigkeit einer vorbestimmten Richtlinie angepasst (510, 515) wird.

9. Verfahren (400; 500) nach einem der Ansprüche 6 bis 8, wobei das Koppeln automatisch erfolgt, falls ein Hinweis zu übermitteln ist.

10. Haushaltsgerät (105), umfassend:
- einen Sensor (142);
- eine Ausgabevorrichtung (140);
- eine Kommunikationseinrichtung (145) zur drahtlosen Kommunikation; sowie
- eine Verarbeitungseinrichtung (130), die dazu eingerichtet ist, ein Mobilgerät (110) drahtlos mit dem Haushaltsgerät (105) zu koppeln
- und dazu, einen mittels des Sensors (142) erfassten Sensorwert dem Mobilgerät (110) bereitzustellen, so dass der Sensor des Haushaltsgeräts durch eine auf dem Mobilgerät (110) ablaufende Funktion, insbesondere eine App, im Wesentlichen so verwendet werden kann, als wäre der Sensor vom Mobilgerät umfasst;
**dadurch gekennzeichnet, dass**
- die Kommunikationseinrichtung (145) dazu eingerichtet ist, eine bereitzustellende Ausgabe vom Mobilgerät (110) zu empfangen;
- die Ausgabevorrichtung (140) in Bereiche unterteilt ist, so dass die auf dem Mobilgerät (110) ablaufende Funktion einem Benutzer (115) parallel zu einer Funktion des Haushaltsgeräts am Haushaltsgerät zugänglich gemacht wird, wobei die auf dem Mobilgerät (110) ablaufende Funktion eine Darstellung eines Kochrezepts umfasst; und
- der Sensor (142) dazu eingerichtet ist, einen Bereich des Haushaltsgeräts abzutasten und einen Sensorwert bereitzustellen, der an das Mobilgerät (110) übermittelt und der Funktion bereitgestellt wird.

11. Mobilgerät (110), umfassend:
- eine Kommunikationseinrichtung (120) zur drahtlosen Kommunikation; sowie
- eine Verarbeitungseinrichtung, die dazu eingerichtet ist, das Mobilgerät (110) drahtlos mit dem Haushaltsgerät (105) mit einem Sensor (142) zu koppeln,
- und dazu, den Sensor (142) als lokales Gerät an eine auf dem Mobilgerät (110) ablaufende Funktion bereitzustellen, so dass der Sensor des Haushaltsgeräts durch die Funktion, insbesondere eine App, im Wesentlichen so verwendet werden kann, als wäre der Sensor vom Mobilgerät umfasst, wobei die auf dem Mobilgerät (110) ablaufende Funktion eine Darstellung eines Kochrezepts umfasst;
**dadurch gekennzeichnet, dass**
- die Kommunikationseinrichtung (120) dazu eingerichtet ist, eine bereitzustellende Ausgabe vom Mobilgerät an das Haushaltsgerät zu übertragen, so dass die auf dem Mobilgerät (110) ablaufende Funktion einem Benutzer parallel zu einer Funktion des Haushaltsgeräts am Haushaltsgerät zugänglich gemacht werden kann, und
- die Kommunikationseinrichtung (120) dazu eingerichtet ist, einen Sensorwert zu empfangen und der Funktion bereitzustellen, wobei der Sensorwert vom Sensor in einem Bereich des Haushaltsgeräts abgetastet und bereitgestellt wird.

12. System (100), umfassend ein Haushaltsgerät (105) nach Anspruch 10 und ein Mobilgerät (110) nach Anspruch 11.

## Claims

1. Method (400; 500), wherein the method (400) comprises the following steps:
- wirelessly coupling (410) a household appliance (105) with a mobile device (110); and
- providing (425) a sensor (142) of the household appliance (105) as a local appliance of the mobile device (110) for a function that is running on the mobile device (110);
in particular an app so that the sensor of the household appliance can be used by the function essentially as if the mobile device comprised the sensor;
- wherein the sensor samples an area of the household appliance and provides a sensor value which is transmitted to the mobile device and provided to the function;
**characterised in that**
- the function that is running on the mobile device (10) comprises a presentation of a cooking recipe and an output to be provided is transmitted from the mobile device to the household appliance; and
- the function that is running on the mobile device (110) is made accessible to a user in parallel with a function of the household appliance on the household appliance.

2. Method (400; 500) according to claim 1, wherein the sensor (142) is provided in dependence upon a predetermined guideline.

3. Method (400; 500) according to claim 2, wherein the provision of the sensor (142) to the function can be controlled by a user (115) of the mobile device (110).

4. Method (400; 500) according to claim 2 or 3, wherein the guideline is obtained from a central point (112).

5. Method (400; 500) according to one of the preceding claims, moreover comprising controlling (435) a sampling criterion of the sensor (142) by the function.

6. Method (400; 500) according to one of the preceding claims, wherein the mobile device (110) receives (505) a message; an indication of the received message is transmitted (510) from the mobile device (110) to the household appliance (105); and the household appliance (105) provides (515) the indication to a user (115).

7. Method (400; 500) according to claim 6, wherein the transmission (510) is performed in dependence upon a predetermined guideline.

8. Method (400; 500) according to claim 6 or 7, wherein a content that is transmitted is adapted (510, 515) in dependence upon a predetermined guideline.

9. Method (400; 500) according to one of claims 6 to 8, wherein the coupling is performed automatically if an indication is to be transmitted.

10. Household appliance (105), comprising:
- a sensor (142);
- an output apparatus (140);
- a communication facility (145) for wireless communication; and
- a processing facility (130) that is configured so as to wirelessly couple a mobile device (110) to the household appliance (105)
- and to provide a sensor value that is acquired by means of the sensor (142) to the mobile device (110) so that the sensor of the household appliance can be used by a function that is running on the mobile device (110), in particular an app, essentially as if the mobile device comprised the sensor;
**characterised in that**
- the communication facility (145) is configured to receive an output to be provided from the mobile device (110);
- the output apparatus (140) is divided into areas so that the function that is running on the mobile device (110) is made accessible to a user (115) in parallel with a function of the household appliance on the household appliance, wherein the function that is running on the mobile device (110) comprises a presentation of a cooking recipe; and
- the sensor (142) is configured to sample an area of the household appliance and to provide a sensor value which is transmitted to the mobile device (110) and provided to the function.

11. Mobile device (110), comprising:
- a communication facility (120) for wireless communication; and
- a processing facility that is configured so as to wirelessly couple the mobile device (110) to the household appliance (105) having a sensor (142)
- and to provide the sensor (142) as a local appliance to a function that is running on the mobile device (110) so that the sensor of the household appliance can be used by the function, in particular an app, essentially as if the mobile device comprised the sensor, wherein the function that is running on the mobile device (110) comprises a presentation of a cooking recipe;
**characterised in that**
- the communication facility (120) is configured to transmit an output to be provided from the mobile device to the household appliance, so that the function that is running on the mobile device (110) can be made accessible to a user in parallel with a function of the household appliance on the household appliance; and
- the communication facility (120) is configured to receive a sensor value and to provide the function, wherein the sensor value is sampled by the sensor in an area of the household appliance and is provided.

12. System (100) comprising a household appliance (105) according to claim 10 and a mobile device (110) according to claim 11.

## Revendications

1. Procédé (400 ; 500), dans lequel le procédé (400) comprend les étapes suivantes :
- couplage sans fil (410) d'un appareil ménager (105) à un appareil mobile (110) ; et
- mise à disposition (425) d'un capteur (142) de l'appareil ménager (105) sous forme d'appareil local de l'appareil mobile (110) pour une fonction exécutée sur l'appareil mobile (110) ; en particulier une application, de sorte que le capteur de l'appareil ménager puisse essentiellement être utilisé par la fonction comme si le capteur faisait partie de l'appareil mobile ;
- dans lequel le capteur balaye une zone de l'appareil ménager et met à disposition une valeur de capteur qui est transmise à l'appareil mobile et mise à disposition de la fonction ;
**caractérisé en ce que**
- la fonction exécutée sur l'appareil mobile (110) comprend une représentation d'une recette de cuisine et une sortie à mettre à disposition est transmise de l'appareil mobile à l'appareil ménager ; et
- la fonction exécutée sur l'appareil mobile (110) est rendue disponible pour un utilisateur sur l'appareil ménager, parallèlement à une fonction de l'appareil ménager.

2. Procédé (400 ; 500) selon la revendication 1, dans lequel le capteur (142) est mis à disposition en fonction d'une directive prédéfinie.

3. Procédé (400 ; 500) selon la revendication 2, dans lequel la mise à disposition du capteur (142) à la fonction est commandable par un utilisateur (115) de l'appareil mobile (110).

4. Procédé (400 ; 500) selon la revendication 2 ou 3, dans lequel la directive est obtenue auprès d'un organisme central (112).

5. Procédé (400 ; 500) selon l'une des revendications précédentes, comprenant en outre une commande (435) d'un critère de balayage du capteur (142) par la fonction.

6. Procédé (400 ; 500) selon l'une des revendications précédentes, dans lequel l'appareil mobile (110) reçoit un message (505) ; une notification relative au message reçu est transmise (510) par l'appareil mobile (110) à l'appareil ménager (105) ; et l'appareil ménager (105) met la notification à disposition (515) d'un utilisateur (115).

7. Procédé (400 ; 500) selon la revendication 6, dans lequel la transmission (510) s'effectue en fonction d'une directive prédéfinie.

8. Procédé (400 ; 500) selon la revendication 6 ou 7, dans lequel un contenu transmis est adapté (510, 515) en fonction d'une directive prédéfinie.

9. Procédé (400 ; 500) selon l'une des revendications 6 à 8, dans lequel le couplage s'effectue automatiquement si une notification est à transmettre.

10. Appareil ménager (105), comprenant :
- un capteur (142) ;
- un dispositif d'émission (140) ;
- un dispositif de communication (145) pour la communication sans fil ; ainsi que
- un dispositif de traitement (130) aménagé pour coupler sans fil un appareil mobile (110) à l'appareil électroménager (105)
- et pour ce faire, mettre à disposition de l'appareil mobile (110) une valeur de capteur détectée au moyen du capteur (142), de sorte que le capteur de l'appareil ménager puisse essentiellement être utilisé par une fonction exécutée sur l'appareil mobile (110), en particulier une application, comme si le capteur faisait partie de l'appareil mobile ;
**caractérisé en ce que**
- le dispositif de communication (145) est aménagé pour recevoir de l'appareil mobile (110) une sortie à mettre à disposition ;
- le dispositif d'émission (140) est divisé en zones, de sorte que la fonction exécutée sur l'appareil mobile (110) est rendue disponible pour un utilisateur (115) sur l'appareil ménager parallèlement à une fonction de l'appareil ménager, dans lequel la fonction exécutée sur l'appareil mobile (110) comprenant une représentation d'une recette de cuisine ; et
- le capteur (142) est aménagé pour balayer une zone de l'appareil ménager et mettre à disposition une valeur de capteur qui est transmise à l'appareil mobile (110) et mise à disposition de la fonction.

11. Appareil mobile (110), comprenant :
- un dispositif de communication (120) pour la communication sans fil ; ainsi que
- un dispositif de traitement aménagé pour coupler sans fil l'appareil mobile (110) à l'appareil ménager (105) avec un capteur (142),
- et pour ce faire, mettre le capteur (142) à disposition, sous forme d'appareil local, d'une fonction s'exécutant sur l'appareil mobile (110), de sorte que le capteur de l'appareil ménager puisse essentiellement être utilisé par la fonction, en particulier une application, comme si le capteur faisait partie de l'appareil mobile, dans lequel la fonction exécutée sur l'appareil mobile (110) comprend une représentation d'une recette de cuisine ;
**caractérisé en ce que**
- le dispositif de communication (120) est aménagé pour transmettre une sortie à mettre à disposition de l'appareil mobile à l'appareil ménager, de sorte que la fonction exécutée sur l'appareil mobile (110) puisse être rendue disponible pour un utilisateur sur l'appareil ménager, parallèlement à une fonction de l'appareil ménager, et
le dispositif de communication (120) est aménagé pour recevoir une valeur de capteur et la mettre à disposition de la fonction, dans lequel la valeur de capteur est balayée et mise à disposition par le capteur dans une zone de l'appareil ménager.

12. Système (100) comprenant un appareil électroménager (105) selon la revendication 10 et un appareil mobile (110) selon la revendication 11.
